(19) Europäisches Patentamt / European Patent Office / Office européen des brevets

(11) **EP 2 428 926 A2**

(12) **EUROPEAN PATENT APPLICATION**

(43) Date of publication:
**14.03.2012 Bulletin 2012/11**

(51) Int Cl.:
***G06Q 30/00*** *(2012.01)*

(21) Application number: **11179306.3**

(22) Date of filing: **30.08.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **08.09.2010 JP 2010200980**

(71) Applicant: **Sony Corporation
Tokyo 108-0075 (JP)**

(72) Inventor: **Sekino, Masashi
Minato-ku, Tokyo 108-0075 (JP)**

(74) Representative: **Robinson, Nigel Alexander Julian
D Young & Co LLP
120 Holborn
London EC1N 2DY (GB)**

(54) **Rating prediction device, rating prediction method, and program**

(57) Provided is a rating prediction device including a posterior distribution calculation unit for taking, as a random variable according to a normal distribution, each of a first latent vector indicating a latent feature of a first item, a second latent vector indicating a latent feature of a second item, and a residual matrix Rh of a rank h (h = 0 to H) of a rating value matrix whose number of ranks is H and which has a rating value expressed by an inner product of the first and second latent vectors as an element and performing variational Bayesian estimation that uses a known rating value given as learning data, and thereby calculating variational posterior distributions of the first and second latent vectors, and a rating value prediction unit for predicting the rating value that is unknown by using the variational posterior distributions of the first and second latent vectors.

**FIG.10**

KNOWN RATING VALUE, HYPER-PARAMETER → POSTERIOR DISTRIBUTION CALCULATION UNIT (132) → RATING VALUE PREDICTION UNIT (133) → RATING PREDICTION VALUE

INITIAL VALUE

INITIAL VALUE CALCULATION UNIT (131)

EP 2 428 926 A2

## Description

The present disclosure relates to a rating prediction device, a rating prediction method, and a program.

In recent years, a vast amount of information has come to be provided to users through a broadband network. Thus, seen from the perspective of a user, it has become difficult to search for data that the user wants from the vast amount of information being provided. On the other hand, seen from the perspective of an information provider, it has become difficult to have a user browse information desired to be provided to the user, due to the information being buried in the vast amount of information. To improve this situation, a mechanism for appropriately extracting information that a user would like from a vast amount of information and providing the information to the user is being structured.

As the mechanism for extracting information that a user would like from a vast amount of information, filtering methods called collaborative filtering and content-based filtering are known, for example. Also, the types of the collaborative filtering include user-based collaborative filtering, item-based collaborative filtering, matrix factorisation-based collaborative filtering (for example, see Ruslan Salakhutdinov and Andriy Mnih, Probabilistic matrix factorisation, In Advances in Neural Information Processing Systems, volume 20, 2008; hereinafter, referred to as a non-patent document 1), and the like. On the other hand, the types of the content-based filtering include user-based content-based filtering, item-based content-based filtering, and the like.

The user-based collaborative filtering is a method of detecting a user B whose preference is similar to a user A, and extracting, based on rating performed by the user B for an item group, an item that the user A would like. For example, in a case the user B gave a favorable rating to an item X, it is predicted that the user A would also like the item X. The item X can be extracted, based on this prediction, as the information that the user A would like. Additionally, the matrix factorisation-based collaborative filtering is a method having both the feature of the user-based collaborative filtering and the feature of the item-based collaborative filtering, and, for its details, one may refer to the non-patent document 1.

Furthermore, the item-based collaborative filtering is a method of detecting an item B having a similar feature as an item A, and extracting a user who likes the item A based on rating performed on the item B by a user group B. For example, in a case a user X gave a favorable rating to the item B, it is predicted that the item A would also be liked by the user X. Based on this prediction, the user X can be extracted as a user who would like the item A.

Furthermore, the user-based content-based filtering is a method of analyzing, in a case there is an item group that a user A likes, the preference of the user A based on the feature of the item group, and extracting a new item having the feature matching the preference of the user A, for example. Also, the item-based content-based filtering is a method of analyzing, in a case there is a user group that likes an item A, the feature of the item A based on the preference of the user group, and extracting a new user who would like the feature of the item A, for example.

When using the filtering methods as described above, information that a user would like can be extracted from a vast amount of information. A user is allowed to extract desired information from an information group narrowed down to only the information that the user would like, and the searchability of information is greatly improved. On the other hand, seen from the perspective of an information provider, information that a user would like can be appropriately provided, and thus, effective provision of information can be realized. However, if the accuracy of filtering is poor, narrowing down of information that a user would like is not appropriately performed, and effects such as improvement of searchability and effective provision of information are not obtained. Accordingly, a highly accurate filtering method is desired.

When using the collaborative filtering described above, the accuracy is known to become poor in a situation where the number of users or the number of items is small. On the other hand, when using the content-based filtering, the accuracy is known to become poorer than the collaborative filtering in a situation where the number of users or the number of items is large. Also, in the case of the content-based filtering, the accuracy is known to become poor if the type of a feature characterizing a user group or a item group is not suitably selected.

In view of the situation, the present inventor has devised a filtering method that is based on probabilistic matrix factorisation that uses variational Bayesian estimation. Additionally, a filtering method that is based on the probabilistic matrix factorisation is described in, for example, (Document 1) Y.J.Lim and Y.W.Teh., "Variational Bayesian approach to movie rating prediction", In Proceedings of KDD Cup and Workshop, 2007., (Document 2) Ruslan Salakhutdinov and Andriy Mnih., "Probabilistic matrix factorisation", In Advances in Neural Information Processing Systems, volume 20, 2008., (Document 3) Ruslan Salakhutdinov and Andriy Mnih., "Bayesian probabilistic matrix factorisation using Markov chain Monte Carlo.", In Proceedings of the International Conference on Machine Learning, volume 25, 2008., and the like.

However, the variational Bayesian estimation is an iterative method, and if the initial value is not appropriately selected, convergence of solutions will take time or a convergent solution of poor quality will be obtained, for example. Also, according to the filtering method described above that is based on probabilistic matrix factorisation, if the number of items becomes large, a vast amount of memory becomes necessary for computation or computational load becomes extremely high, for example.

In light of the foregoing, it is desirable to provide a rating prediction device, a rating prediction method and a program which are novel and improved, and which are capable of realizing filtering that is based on probabilistic matrix factorisation at a higher rate while holding down the amount of memory necessary for computation.

According to at least an example embodiment of the present disclosure, there is provided a rating prediction device which includes a posterior distribution calculation unit for taking, as a random variable according to a normal distribution, each of a first latent vector indicating a latent feature of a first item, a second latent vector indicating a latent feature of a second item, and a residual matrix $R_h$ of a rank $h$ ($h$ = 0 to $H$) of a rating value matrix whose number of ranks is $H$ and which has a rating value expressed by an inner product of the first latent vector and the second latent vector as an element and performing variational Bayesian estimation that uses a known rating value given as learning data, and thereby calculating variational posterior distributions of the first latent vector and the second latent vector, and a rating value prediction unit for predicting the rating value that is unknown by using the variational posterior distributions of the first latent vector and the second latent vector calculated by the posterior distribution calculation unit.

The posterior distribution calculation unit may take, as initial values, variational posterior distributions of the first latent vector and the second latent vector obtained by taking the residual matrix $R_h$ as the random variable and performing the variational Bayesian estimation, and may calculate the variational posterior distributions of the first latent vector and the second latent vector by taking the rating value matrix as the random variable according to the normal distribution and performing the variational Bayesian estimation.

The posterior distribution calculation unit may define a first feature vector indicating a feature of the first item, a second feature vector indicating a feature of the second item, a first projection matrix for projecting the first feature vector onto a space of the first latent vector, and a second projection matrix for projecting the second feature vector onto a space of the second latent vector, may express a distribution of the first latent vector by a normal distribution that takes a projection value of the first feature vector based on the first projection matrix as an expectation and express a distribution of the second latent vector by a normal distribution that takes a projection value of the second feature vector based on the second projection matrix as an expectation, and may calculate variational posterior distributions of the first projection matrix and the second projection matrix together with the variational posterior distributions of the first latent vector and the second latent vector.

The rating value prediction unit may take, as a prediction value of the unknown rating value, an inner product of an expectation of the first latent vector and an expectation of the second latent vector calculated using the variational posterior distributions of the first latent vector and the second latent vector.

The rating prediction device may further include a recommendation recipient determination unit for determining, in a case the unknown rating value predicted by the rating value prediction unit exceeds a predetermined threshold value, a second item corresponding to the unknown rating value to be a recipient of a recommendation of a first item corresponding to the unknown rating value.

The second item may indicate a user. In this case, the rating prediction device further includes a recommendation unit for recommending, in a case the recipient of the recommendation of the first item is determined by the recommendation recipient determination unit, the first item to the user corresponding to the recipient of the recommendation of the first item.

According to at least another example embodiment of the present disclosure, there is provided a rating prediction method which includes taking, as a random variable according to a normal distribution, each of a first latent vector indicating a latent feature of a first item, a second latent vector indicating a latent feature of a second item, and a residual matrix $R_h$ of a rank $h$ ($h$ = 0 to $H$) of a rating value matrix whose number of ranks is $H$ and which has a rating value expressed by an inner product of the first latent vector and the second latent vector as an element and performing variational Bayesian estimation that uses a known rating value given as learning data, and thereby calculating variational posterior distributions of the first latent vector and the second latent vector, and predicting the rating value that is unknown by using the calculated variational posterior distributions of the first latent vector and the second latent vector.

According to at least another example embodiment of the present disclosure, there is provided a program for causing a computer to realize a posterior distribution calculation function of taking, as a random variable according to a normal distribution, each of a first latent vector indicating a latent feature of a first item, a second latent vector indicating a latent feature of a second item, and a residual matrix $R_h$ of a rank $h$ ($h$ = 0 to $H$) of a rating value matrix whose number of ranks is $H$ and which has a rating value expressed by an inner product of the first latent vector and the second latent vector as an element and performing variational Bayesian estimation that uses a known rating value given as learning data, and thereby calculating variational posterior distributions of the first latent vector and the second latent vector, and a rating value prediction function of predicting the rating value that is unknown by using the variational posterior distributions of the first latent vector and the second latent vector calculated by the posterior distribution calculation function. According to another embodiment of the present disclosure, there is provided a computer-readable recording medium in which the program is recorded.

According to the embodiments of the present disclosure described above, it is possible to realize filtering that is based on probabilistic matrix factorisation at a higher rate while holding down the amount of memory necessary for computation.

Further particular and preferred aspects of the present invention are set out in the accompanying independent and dependent claims. Features of the dependent claims may be combined with features of the independent claims as appropriate, and in combinations other than those explicitly set out in the claims.

Embodiments of the invention will now be described, by way of example only, with reference to the accompanying drawings in which:

FIG. 1 is an explanatory diagram for describing a configuration of a recommendation system capable of recommending an item based on matrix factorisation-based collaborative filtering;

FIG. 2 is an explanatory diagram for describing a configuration of a rating value database;

FIG. 3 is an explanatory diagram for describing a configuration of a latent feature vector;

FIG. 4 is an explanatory diagram for describing a configuration of a latent feature vector;

FIG. 5 is an explanatory diagram for describing a flow of processes related recommendation of an item based on the matrix factorisation-based collaborative filtering;

FIG. 6 is an explanatory diagram for describing a functional configuration of a rating prediction device capable of prediction of a rating value and recommendation of an item based on the probabilistic matrix factorisation-based collaborative filtering;

FIG. 7 is an explanatory diagram for describing a structure of a feature vector;

FIG. 8 is an explanatory diagram for describing a structure of a feature vector;

FIG. 9 is an explanatory diagram for describing a flow of processes related to prediction of a rating value and recommendation of an item based on the probabilistic matrix factorisation-based collaborative filtering;

FIG. 10 is an explanatory diagram for describing a functional configuration of a rating prediction device according to an example embodiment of the present disclosure;

FIG. 11 is an explanatory diagram showing experimental results for describing an effect obtained by applying the configuration of the rating prediction device according to the example embodiment;

FIG. 12 is an explanatory diagram showing experimental results for describing an effect obtained by applying the configuration of the rating prediction device according to the example embodiment; and

FIG. 13 is an explanatory diagram for describing a hardware configuration of an information processing apparatus capable of realizing a function of the rating prediction device according to the example embodiment.

Hereinafter, preferred example embodiments of the present disclosure will be described in detail with reference to the appended drawings. Note that, in this specification and the appended drawings, structural elements that have substantially the same function and configuration are denoted with the same reference numerals, and repeated explanation of these structural elements is omitted.

[Flow of Explanation]

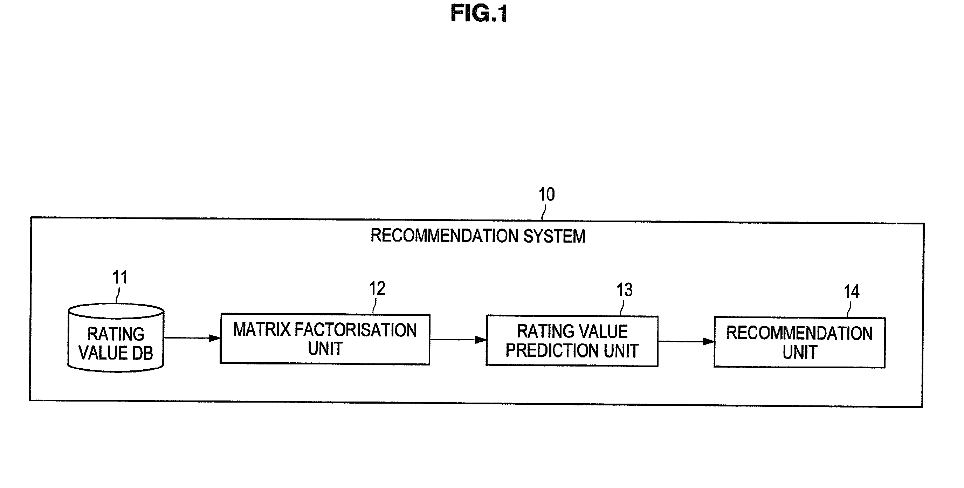

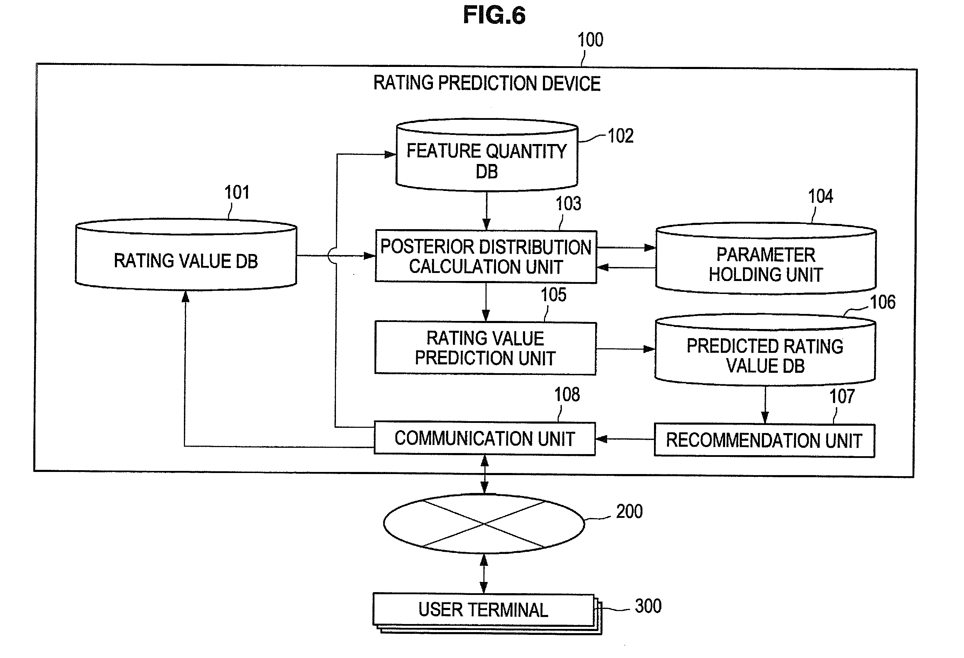

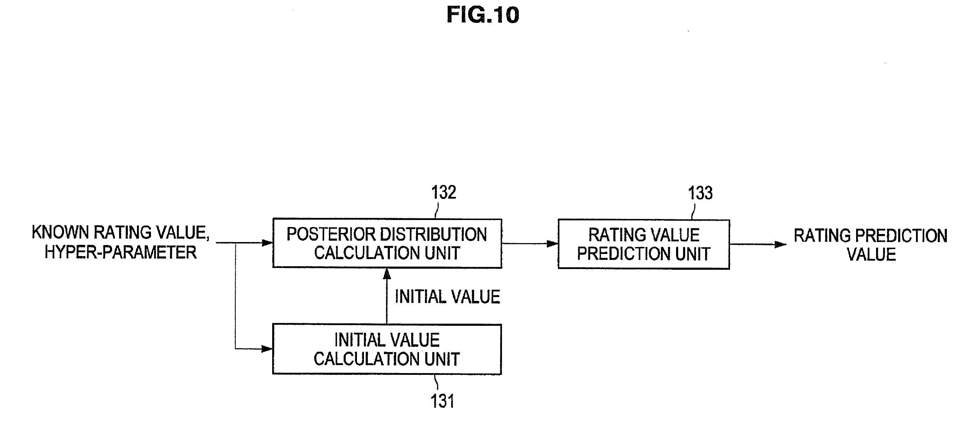

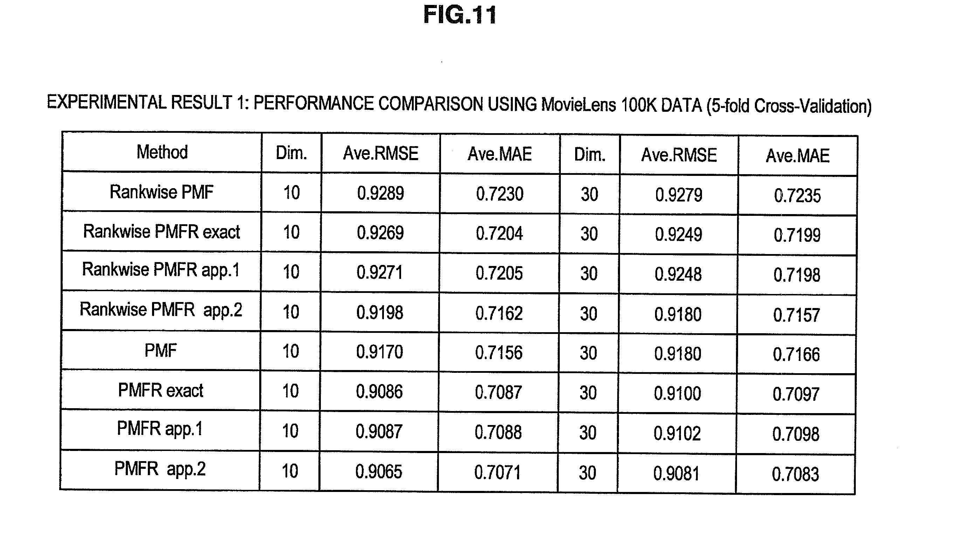

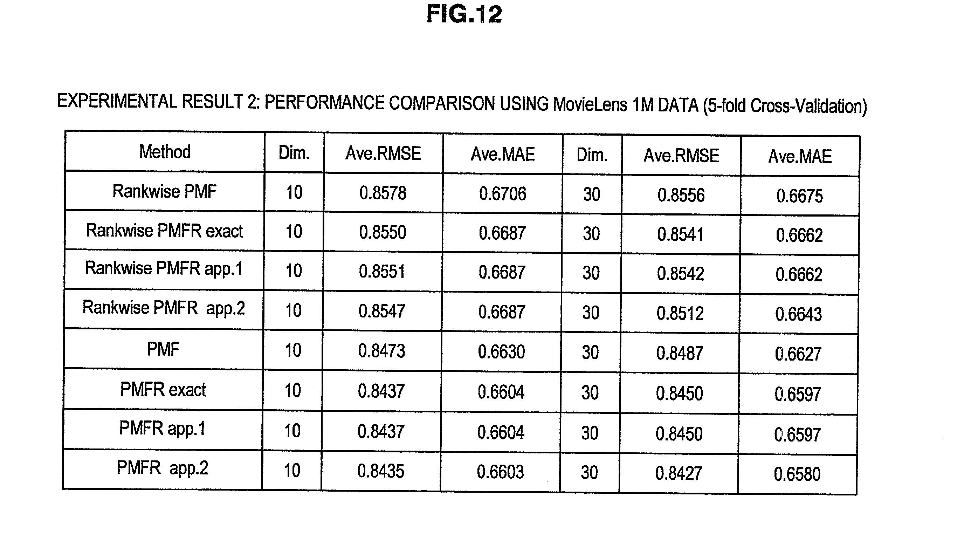

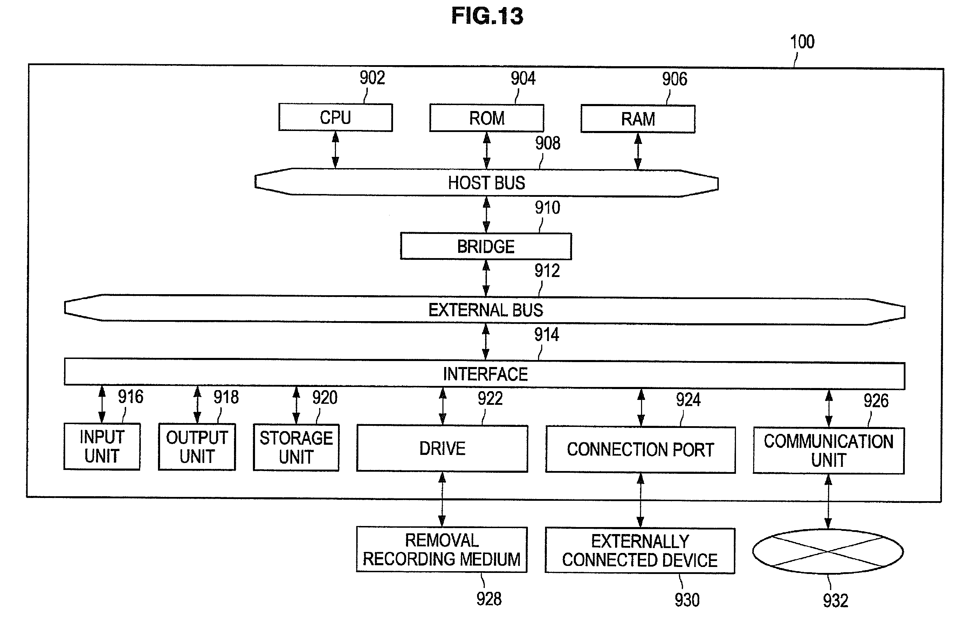

The flow of explanation on an embodiment of the present disclosure which will be described below will be briefly stated here. First, a system configuration of a recommendation system capable of realizing recommendation of an item based on matrix factorisation-based collaborative filtering and its operation will be described with reference to FIGS. 1 to 5. Next, a functional configuration of a rating prediction device (recommendation system) capable of realizing prediction of a rating value and recommendation of an item based on the probabilistic matrix factorisation-based collaborative filtering and its operation will be described with reference to FIGS. 6 to 9. Then, a functional configuration of a rating prediction device according to an embodiment will be described with reference to FIG. 10. Then, effects obtained when applying the configuration of the rating prediction device according to the embodiment will be described with reference to FIGS. 11 and 12 while referring to concrete experimental results. Then, a hardware configuration of an information processing apparatus capable of realizing a rating prediction device according to an embodiment of the present disclosure will be described with reference to FIG. 13.

(Description Items)

1: Introduction

1-1: Matrix Factorisation-Based Collaborative Filtering

1-1-1: Configuration of Recommendation System 10

1-1-2: Operation of Recommendation System 10

1-2: Probabilistic Matrix Factorisation-Based Collaborative Filtering

1-2-1: Focus of Observation

1-2-2: Configuration of Rating Prediction Device 100

1-2-3: Operation of Rating Prediction Device 100

2: Embodiment

2-1: Configuration of Rating Prediction Device 100

2-2: Experimental Result

3: Example Hardware Configuration

<1: Introduction>

First, matrix factorisation-based collaborative filtering and probabilistic matrix factorisation-based collaborative filtering will be briefly described. Then, issues of these filtering methods will be summarized. Additionally, a filtering method of an embodiment described later (sometimes referred to as the present method) is for solving the issues of these general filtering methods.

[1-1: Matrix Factorisation-Based Collaborative Filtering]

First, the matrix factorisation-based collaborative filtering will be described. The matrix factorisation-based collaborative filtering is a method of estimating a vector corresponding to a preference of a user and a vector corresponding to a feature of an item and predicting an unknown rating value based on the estimation result, in such a way that a known rating value of a combination of a user and an item is well described.

(1-1-1: Configuration of Recommendation System 10)

First, a functional configuration of a recommendation system 10 capable of realizing the matrix factorisation-based collaborative filtering will be described with reference to FIG. 1. FIG. 1 is an explanatory diagram showing a functional configuration of the recommendation system 10 capable of realizing the matrix factorisation-based collaborative filtering.
As shown in FIG. 1, the recommendation system 10 is configured mainly from a rating value database 11, a matrix factorisation unit 12, a rating value prediction unit 13, and a recommendation unit 14.

(Rating Value Database 11)

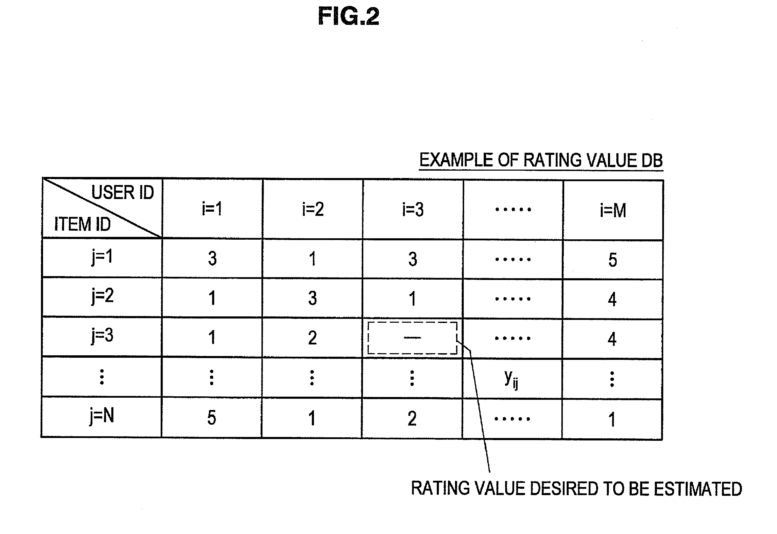

As shown in FIG. 2, the rating value database 11 is a database in which a rating value of a combination of a user i and an item j is stored. In the following, for the sake of explanation, IDs for identifying users and IDs for identifying items will be expressed as $i = 1,...,M$ and $j = 1,...,N$, respectively. Additionally, there is also a combination of a user and an item to which a rating value is not assigned. The matrix factorisation-based collaborative filtering is a method of predicting a rating value of a combination of a user and an item to which a rating value is not assigned while taking into account a latent feature of the user and a latent feature of the item.

(Matrix Factorisation Unit 12)

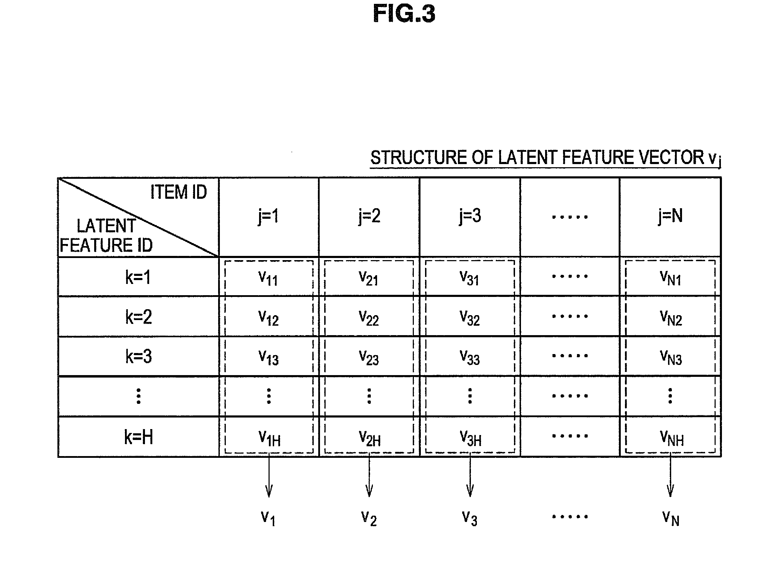

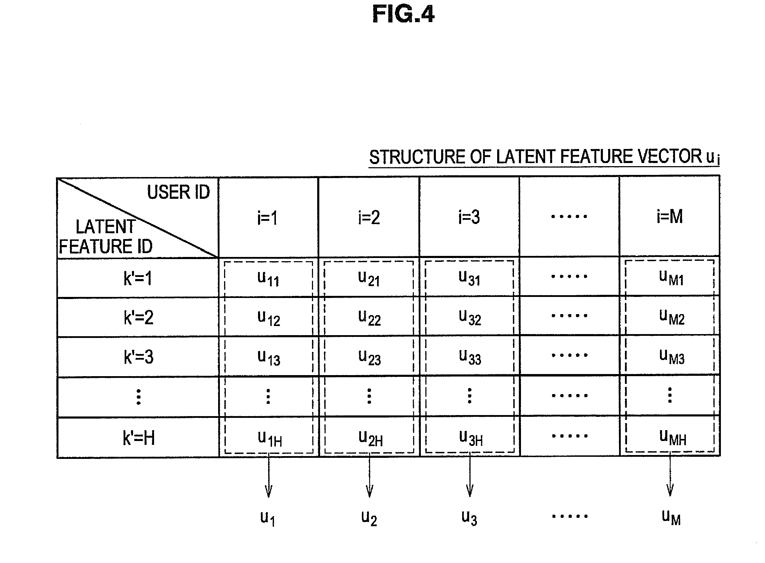

When expressing a rating value corresponding to a user i and an item j as $y_{ij}$, a set of rating values stored in the rating value database 11 can be assumed to be a rating value matrix $\{Y_{ij}\}$ (i = 1,...,M, j = 1,...,N) taking $y_{ij}$ as an element. The matrix factorisation unit 12 introduces a latent feature vector $u_i$ (see FIG. 4) indicating a latent feature of a user i and a latent feature vector $v_j$ (see FIG. 3) indicating a latent feature of an item j (j = 1,...,N) , and factorises the rating value matrix $\{y_{ij}\}$ and expresses the same by latent feature vectors $u_i$, $v_j$ in such a way that all of the known rating value $y_{ij}$ is well explained. Additionally, the known rating value $y_{ij}$ means the rating value $y_{ij}$ for which a rating value is stored in the rating value database 11.

Additionally, each element of the latent feature vector $u_i$ indicates a latent feature of a user. Similarly, each element of the latent feature vectors $v_j$ indicates a latent feature of an item. Moreover, as can be understood from the expression "latent," each element of the latent feature vectors $u_i$, $v_j$ does not indicate a specific feature of a user or an item, but is only a parameter that is obtained by model calculation described later. Moreover, a parameter group forming the latent feature vector $u_i$ reflects the preference of a user. Also, a parameter group forming the latent feature vector $v_j$ reflects the feature of an item.

Concrete processing of the matrix factorisation unit 12 will be described here. First, as shown in formula (1) below, the matrix factorisation unit 12 expresses the rating value $y_{ij}$ by an inner product of the latent feature vectors $u_i$, $v_j$. Additionally, the superscript T means transposition. Also, the number of dimensions of the latent feature vectors $u_i$, $v_j$ is H. To obtain the latent feature vectors $u_i$, $v_j$ in such a way that all of the known rating value $y_{ij}$ is well explained, it is considered sufficient that the latent feature vectors $u_i$, $v_j$ with which a squared error J defined by formula (2) below becomes minimum are calculated, for example. However, it is known that, in reality, even if an unknown rating value $y_{ij}$ is predicted using the latent feature vectors $u_i$, $v_j$ with which the squared error J becomes minimum, a sufficient prediction accuracy is not achieved.

$$y_{ij} = u_i^T v_j$$

$$\ldots \ (1)$$

$$J(\{u_i\},\{v_j\};\{y_{ij}\}) = \sum_{i,j} (y_{ij} - u_i^T v_j)^2$$

(where the sum regarding i and j on the right side is calculated for a set of known rating values.) ... (2)

Thus, the matrix factorisation unit 12 calculates the latent feature vectors $u_i$,$v_j$ by using a regularization term R defined by formula (3) below. Specifically, the matrix factorisation unit 12 calculates the latent feature vectors $u_i$, $v_j$ with which an objective-function Q (see formula (4) below) which is expressed by linear combination of the squared error J and the regularization term R becomes minimum. Additionally, β is a parameter for expressing the weight of the regularization term R. As is clear from formula (3) below, when calculating the latent feature vectors $u_i$, $v_j$ with which the objective function Q becomes minimum, the regularization term R acts in such a way that the latent feature vectors $u_i$, $v_j$ will be close to zero.

Moreover, to act, at the time of calculation of the latent feature vectors $u_i$, $v_j$ with which the objective function Q becomes minimum, in such a way that the latent feature vectors $u_i$, $v_j$ will be close to vectors $\mu_u$, $\mu_v$, the regularization term R may be modified as formula (5) below. Additionally, the vector $\mu_u$ mentioned above is the mean of the latent feature vector $u_i$, and the vector $\mu_v$ mentioned above is the mean of the latent feature vector $v_j$.

$$R(\{u_i\},\{v_j\}) = \sum_{i=1}^{M} \|u_i\|^2 + \sum_{j=1}^{N} \|v_j\|^2$$

$$\ldots \ (3)$$

$$Q(\{u_i\},\{v_j\};\{y_{ij}\}) = J(\{u_i\},\{v_j\};\{y_{ij}\}) + \beta \times R(\{u_i\},\{v_j\})$$

$$\ldots \quad (4)$$

$$R(\{u_i\},\{v_j\}) = \sum_{i=1}^{M} \left\| u_i - \mu_u \right\|^2 + \sum_{j=1}^{N} \left\| v_j - \mu_v \right\|^2$$

$$\ldots \quad (5)$$

The matrix factorisation unit 12 calculates the latent feature vectors $u_i$, $v_j$ with which the objective function Q shown in formula (4) above becomes minimum. The latent feature vectors $u_i$, $v_j$ calculated by the matrix factorisation unit 12 in this manner are input to the rating value prediction unit 13.

(Rating Value Prediction Unit 13)

When the latent feature vectors $u_i$, $v_j$ (i = 1,...,M, j = 1,...,N) are input from the matrix factorisation unit 12, the rating value prediction unit 13 calculates an unknown rating value by using the input latent feature vectors $u_i$, $v_j$ and based on formula (1) above. For example, in a case a rating value $y_{mn}$ is unknown, the rating value prediction unit 13 calculates rating value $y_{mn} = u_m^T V_n$ by using latent feature vectors $u_m$, $v_n$. An unknown rating value calculated by the rating value prediction unit 13 in this manner is input to the recommendation unit 14.

(Recommendation Unit 14)

When the unknown rating value $y_{mn}$ is input from the rating value prediction unit 13, the recommendation unit 14 decides, based on the input unknown rating value $y_{mn}$, whether or not to recommend an item n to a user m. For example, if the unknown rating value $y_{mn}$ exceeds a predetermined threshold value, the recommendation unit 14 recommends the item n to the user m. On the other hand, if the rating value $y_{mn}$ falls below the predetermined threshold value, the recommendation unit 14 does not recommend the item n to the user m. Additionally, the recommendation unit 14 may also be configured to recommend a certain number of items that are ranked high, for example, instead of determining items to be recommended based on the threshold value.

In the foregoing, a functional configuration of the recommendation system 10 capable of realizing the matrix factorisation-based collaborative filtering has been described. Since only a known rating value is used by the matrix factorisation-based collaborative filtering described above, there is an issue that, in a state where the number of users or the number of items is small or the log of the rating values is small, a sufficient prediction accuracy is not achieved.

(1-1-2: Operation of Recommendation System 10)

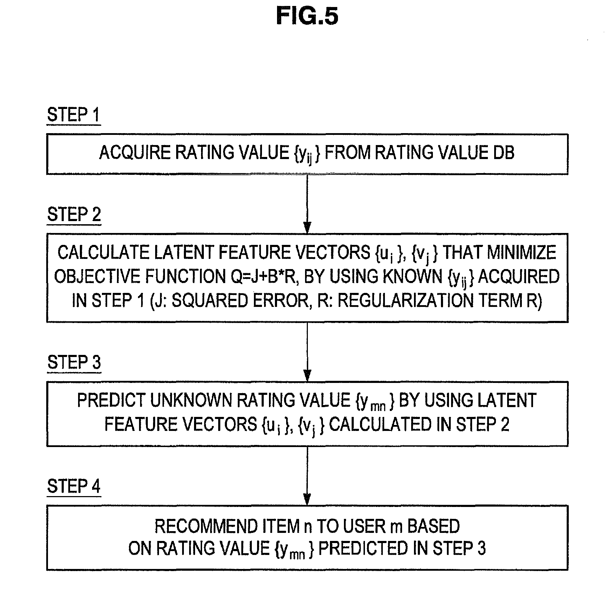

Next, an operation of the recommendation system 10 will be stated and a flow of processes of the matrix factorisation-based collaborative filtering will be described with reference to FIG. 5. FIG. 5 is an explanatory diagram for describing a flow of processes of the matrix factorisation-based collaborative filtering.

First, the recommendation system 10 acquires, by a function of the matrix factorisation unit 12, a set $\{y_{ij}\}$ of rating values $y_{ij}$ from the rating value database 11 (Step 1). Next, the recommendation system 10 calculates, by a function of the matrix factorisation unit 12, latent feature vectors $\{u_i\}$, $\{v_j\}$ that minimize the objective function Q defined by formula (3) above, by using the known rating value set $\{y_{ij}\}$ acquired in Step 1 (Step 2). The latent feature vectors $\{u_i\}$-, $\{v_j\}$ calculated by the matrix factorisation unit 12 are input to the rating value prediction unit 13.

Next, the recommendation system 10 calculates (predicts) an unknown rating value $\{y_{mn}\}$ by a function of the rating value prediction unit 13 by using the latent feature vectors $\{u_i\}$, $\{v_j\}$ calculated in Step 2 (Step 3). The unknown rating value $\{y_{mn}\}$ calculated by the rating value prediction unit 13 is input to the recommendation unit 14. Then, in a case the rating value $\{y_{mn}\}$ calculated in Step 3 exceeds a predetermined threshold value, the recommendation system 10 recommends an item n to a user m by a function of the recommendation unit 14 (Step 4). Of course, in a case the rating value $\{y_{mn}\}$ calculated in Step 3 falls below the predetermined threshold value, recommendation of the item n is not made to the user m.

As has been described, according to the matrix factorisation-based collaborative filtering, the latent feature vectors $\{u_i\}$, $\{v_j\}$ are calculated by using the known rating value $\{y_{ij}\}$, and the unknown rating value $\{y_{mn}\}$ is predicted based on the calculation result. Then, recommended of an item n is made to an user m based on the calculation result.

The matrix factorisation-based collaborative filtering has a higher prediction accuracy of the rating value compared to a general user-based collaborative filtering or the item-based collaborative filtering. However, since only a known rating value is used by the matrix factorisation-based collaborative filtering, there is an issue that, in a state where the number of users or the number of items is small or the log of the rating values is small, the prediction accuracy becomes poor. To solve such an issue, the present inventor has devised a filtering method as follows.

[1-2: Probabilistic Matrix Factorisation-Based Collaborative Filtering]

The filtering method described here differs from the matrix factorisation-based collaborative filtering described above and relates to a new filtering method (hereinafter, probabilistic matrix factorisation-based collaborative filtering) that takes into account not only a known rating value, but also a known feature of a user or an item. When applying this probabilistic matrix factorisation-based collaborative filtering, a rating value can be predicted with a sufficiently high accuracy even in a state where the number of users or the number of items is small or the log of the rating values is small. Also, since it is based on the collaborative filtering, there is an advantage that the prediction accuracy of the rating value improves as the number of users or the number of items increases. A detailed explanation will be given below.

(1-2-1: Focus of Observation)

In the matrix factorisation-based collaborative filtering described above, only the known rating value was taken into account. On the other hand, the probabilistic matrix factorisation-based collaborative filtering takes into account known features of a user and an item, in addition to the known rating value, and causes these known features to be reflected on the latent feature vectors $\{u_i\}$, $\{v_j\}$. For example, the regularization term R which was expressed by formula (5) above for the matrix factorisation-based collaborative filtering above is changed to a regularization term R expressed by formula (6) below. Additionally, $D_u$ and $D_v$ included in formula (6) below are regression matrices for projecting feature vectors $X_{ui}$, $X_{vj}$ onto the spaces of the latent feature vectors $u_i$, $v_j$, respectively.

$$R(\{u_i\},\{v_j\}) = \sum_{i=1}^{M} \left\| u_i - D_u x_{ui} \right\|^2 + \sum_{j=1}^{N} \left\| v_j - D_v x_{vj} \right\|^2$$

$$\cdots \quad (6)$$

In the case the regularization term R is changed as formula (6) above, at the time of calculating the latent feature vectors $\{u_i\}$, $\{v_j\}$ so as to minimize the objective function Q expressed by formula (4) above, the latent feature vector $u_i$ is restricted so as to be closer to $D_u X_{ui}$ and the $v_j$ is restricted so as to be closer to $D_v X_{vj}$. Accordingly, the latent feature vectors $u_i$ of users having a similar known feature will be close to each other. Similarly, the latent feature vector $v_j$ of items having a similar known feature will also be close to each other. Therefore, even with a user or an item for which the number of known rating values is small, a latent feature vector similar to that of other users or items can be obtained based on the known feature. As a result, a rating value can be predicted with high accuracy even for a user or an item that with a small number of known rating values. In the following, a concrete calculation method and a configuration of a rating prediction device 100 capable of realizing this calculation method will be described.

(1-2-2: Configuration of Rating Prediction Device 100)

A functional configuration of a rating prediction device 100 capable of realizing the probabilistic matrix factorisation-based collaborative filtering will be described with reference to FIG. 6. FIG. 6 is an explanatory diagram for describing a functional configuration of the rating prediction device 100. Additionally, the configuration of the rating prediction device 100 illustrated in FIG. 6 includes a structural element for recommending an item to a user, but it is also possible to extract only the section for predicting an unknown rating value as the rating prediction device 100.

As shown in FIG. 6, the rating prediction device 100 includes a rating value database 101, a feature quantity database 102, a posterior distribution calculation unit 103, and a parameter holding unit 104. Also, the rating prediction device 100 includes a rating value prediction unit 105, a predicted rating value database 106, a recommendation unit 107, and a communication unit 108. Furthermore, the rating prediction device 100 is connected to a user terminal 300 via a network 200.

(Rating Value Database 101)

The rating value database 101 is a database in which a rating value assigned to a combination of a user i and an item j is stored (see FIG. 2). Additionally, as with the case of the matrix factorisation-based collaborative filtering described above, IDs for identifying users and IDs for identifying items will be expressed as i = 1,...,M and j = 1,...,N, respectively, for the sake of explanation. Also, each rating value will be expressed as $y_{ij}$, and a set of the rating values will be expressed as $\{y_{ij}\}$.

(Feature Quantity Database 102)

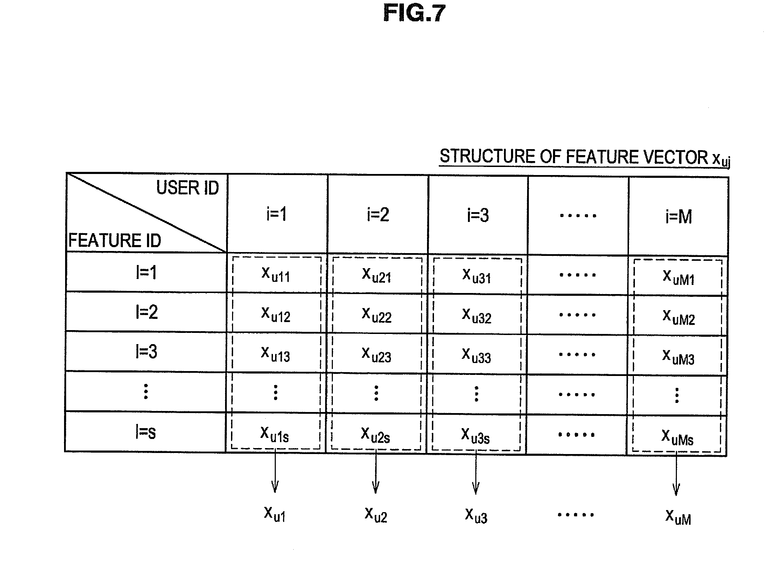

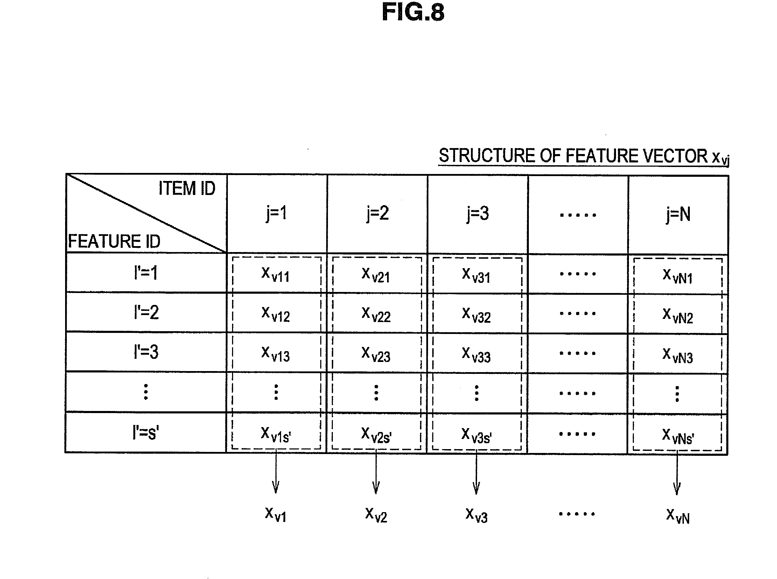

The feature quantity database 102 is a database in which each element of a feature vector $\{x_{ui}\}$ indicating a known feature of a user and each element of a feature vector $\{x_{vj}\}$ indicating a known feature of an item are stored, as shown in FIGS. 7 and 8. The known feature of a user may be age, sex, birthplace, occupation, or the like, for example. On the other hand, the known feature of an item may be genre, author, cast, director, publication date, melody, or the like, for example.

(Posterior Distribution Calculation Unit 103, Parameter Holding Unit 104)

In the probabilistic matrix factorisation-based collaborative filtering, the regression matrices $D_u$, $D_v$ were added as parameters, as shown in formula (6) above. Accordingly, to minimize the influence of the increase in the number of parameters on the accuracy of estimation, consideration will now be given on the use of Bayesian estimation. The Bayesian estimation is a method of estimating an unknown parameter in a state where learning data is given, by using a probabilistic model. A known rating value set $\{y_{ij}\}$ and feature vectors $\{x_{ui}\}$, $\{x_{vj}\}$ are given here as the learning data. Also, as the unknown parameter, there are an unknown rating value set $\{y_{mn}\}$, the regression matrices $D_u$, $D_v$, and other parameters included in the probabilistic model.

The probabilistic model used by the probabilistic matrix factorisation-based collaborative filtering is expressed by formulae (7) to (9) below. Additionally, $N(\mu, \Sigma)$ indicates a normal distribution where the mean is $\mu$ and the covariance matrix is $\Sigma$. Also, diag(...) indicates a diagonal matrix having ... as a diagonal element. Additionally, $\lambda$, $\beta_u$, and $\beta_v$ are parameters introduced in the probabilistic model. The $\lambda$ is a scalar quantity, $\beta_u$ is $(\beta_{u1},..., \beta_{uH})$, and $\beta_v$ is $(\beta_{v1},..., \beta_{vH})$. The probabilistic model expressed by formulae (7) to (9) below is equivalent to computation for calculating latent feature vectors $\{u_i\}$, $\{v_j\}$ in such a manner as to minimize the objective function Q by using the regularization term R expressed by formula (6) above. Additionally, modification toward a more flexible model is made in that the parameter $\beta$ of the scalar quantity appearing in formula (4) above is changed to vector quantities $\beta_u$, $\beta_v$.

$$ y_{ij} \sim N(u_i^T v_j, \lambda^{-1}) $$

$$ \cdots \ (7) $$

$$ u_i \sim N(D_u x_{ui}, diag(\beta_u)^{-1}) $$

$$ \cdots \ (8) $$

$$ v_j \sim N(D_v x_{vj}, diag(\beta_v)^{-1}) $$

$$ \cdots \ (9) $$

The posterior distribution calculation unit 103 is means for performing the Bayesian estimation based on the probabilistic model described above and calculating the posterior distribution of the latent feature vectors $\{u_i\}$, $\{v_j\}$, the

regression matrices $D_u$, $D_v$, and the parameters $\lambda$, $\beta_u$, $\beta_v$ included in the probabilistic model. Additionally, in the following explanation, the latent feature vector $\{u_i\}$ $\{v_j\}$, the regression matrices $D_u$, $D_v$, and the parameters $\lambda$, $\beta_u$, $\beta_v$ included in the probabilistic model are sometimes collectively referred to as the parameter. Also, the parameter set or calculated by the posterior distribution calculation unit 103 is stored in the parameter holding unit 104.

The Bayesian estimation includes an estimation step of obtaining, based on the probabilistic model, the posterior distribution of each parameter in a state where learning data is given, and a prediction step of marginalizing the obtained posterior distribution and obtaining the distribution of a parameter or its expectation. If a complicated probabilistic model is used, the posterior distribution also becomes extremely complicated, and the distribution of a parameter or an expectation desired to be obtained by the prediction step becomes hard to obtain. Thus, in the following, variational Bayesian estimation which is an approximate solution of the Bayesian estimation will be used. In the case of the variational Bayesian estimation, the posterior distribution is approximated by a distribution that is easily calculated, and, thus, complication of the posterior distribution can be avoided and the distribution of a parameter or an expectation becomes easy to obtain.

For example, when learning data is expressed as a vector quantity x and a set of parameters is expressed as, a $\Theta = \{\theta_1, ..., \theta_K\}$, a posterior distribution $p(\Theta|X)$ is, in the case of the variational Bayesian estimation, approximated as shown in formula (10) below. When approximation is performed in this manner, the variational posterior distribution q $(\theta_k)$ of a parameter $\theta_k$ (k = 1,...,K) is known to be formulae (11) and (12) below.

Additionally, $E_{p(x)}[f(x)]$ indicates an expectation of f(x) under a distribution p(x). Also, const. indicates a constant. Additionally, each variational posterior distribution q $(\theta_k)$ (k = 1,...,K) depends on another distribution. Thus, to calculate an optimal variational posterior distribution, a process of updating the parameter of each variational posterior distribution under another variational posterior distribution has to be repeatedly performed after an appropriate initialization process. A concrete algorithm related to this process will be described later.

$$p(\Theta \mid X) \approx \prod_{k=1}^{K} q(\theta_k)$$

$$\dots \ (10)$$

$$\ln q(\theta_k) = E_{q(\Theta_{(k)})}[\ln p(X, \Theta)] + const.$$

$$\dots \ (11)$$

$$q(\Theta_{(k)}) = \prod_{l \neq k} q(\theta_l)$$

$$\dots \ (12)$$

Here, an algorithm related to the variational Bayesian estimation is applied to the probabilistic model expressed by formulae (7) to (9) above. First, the posterior distribution $p(\Theta|X)$ is expressed as formula (13) below. Additionally, the regression matrices $D_u$, $D_v$ are expressed as $D_u = (d_{u1},...,d_{uH})^T$ and $D_v = (d_{v1},...,d_{vH})^T$. Moreover, $d_{uh}$ and $d_{vh}$ (h = 1,..., H) are vector quantities.

$$p(\{u_i\}_{i=1}^{M}, \{v_j\}_{j=1}^{N}, D_u, D_v, \beta_u, \beta_v, \lambda \mid \{y_{ij}\}, \{x_{ui}\}_{i=1}^{M}, \{x_{vj}\}_{j=1}^{N})$$

$$\approx \prod_{i=1}^{M} q(u_i) \prod_{j=1}^{N} q(v_j) \prod_{h=1}^{H} \left( q(d_{uh}) q(d_{vh}) q(\beta_{uh}) q(\beta_{vh}) \right) q(\lambda)$$

$$\ldots \quad (13)$$

Now, there is a symmetry between the latent feature vectors $u_i$, $v_j$. Thus, in the following, consideration will be given only to the distribution of $u_i$. Also, to simplify the expression, $\beta_u$ will simply be expressed as $\beta = (\beta_1,...,\beta_H)$, $D_u$ simply as D, $d_{uh}$ as $d_h$, and $x_{ui}$ as $x_i$. Furthermore, a feature vector $x_i$, a regression vector $d_h$ and a parameter $\gamma_h$ of its prior distribution are assumed to be K-dimensional. Here, the prior distributions of the parameters $d_h$, $\beta$ are defined as formulae (14) and (15) below. Also, the distribution of parameter $\gamma = (\gamma_1,...,\gamma_k)$ appearing in formula (14) below is defined as formula (16) below. Each of these distributions is a conjugate prior distribution that is the same distribution as its posterior distribution. Additionally, in the case there is no prior knowledge, the parameters of a prior distribution may be set to be that of uniform distribution. Furthermore, to cause the prior knowledge to be reflected, the parameters of the prior distribution may be adjusted.

$$p(d_h) = N(d_h; 0, diag(\gamma)^{-1})$$

$$\ldots \quad (14)$$

$$p(\beta_h) = Gam(\beta_h; a_{\beta h}, b_{\beta h})$$

$$\ldots \quad (15)$$

$$p(\gamma_h) = Gam(\gamma_h; a_{\gamma h}, b_{\gamma h})$$

$$\ldots \quad (16)$$

Gam(...) appearing in formulae (15) and (16) indicates a Gamma distribution. The posterior distribution calculation unit 103 calculates the variational posterior distribution of formula (11) above under the conditions shown in formulae (13) to (16). First, a variational posterior distribution $q(u_i)$ of the latent feature vector $u_i$ will be formula (17) below. Additionally, parameters $\mu'_{ui}$, $\Sigma'_{ui}$ appearing in formula (17) below are expressed by formulae (18) and (19) below. Furthermore, a variational posterior distribution q($d_h$) related to an element $d_h$ of the regression matrix D will be formula (20) below. Additionally, parameters $\mu'_{dh}$, $\Sigma'_{dh}$ appearing in formula (20) below are expressed by formulae (21) and (22).

$$q(u_i) = N(u_i; \mu'_{ui}, \Sigma'_{ui})$$

$$\ldots \quad (17)$$

$$\mu'_{ui} = E[\Sigma'_{ui}\{\lambda V^T diag(\pi_i)y_i + diag(\beta)Dx_i\}]$$

$$\dots (18)$$

$$\Sigma'^{-1}_{ui} = E[\lambda V^T diag(\pi_i)V + diag(\beta)]$$

$$\dots (19)$$

$$q(d_h) = N(d_h; \mu'_{dh}, \Sigma'_{dh})$$

$$\dots (20)$$

$$\mu'_{dh} = E[\beta_h \Sigma'_{dh} X^T u_h]$$

$$\dots (21)$$

$$\Sigma'^{-1}_{dh} = E[\beta_h X^T X + diag(\gamma)]$$

$$\dots (22)$$

Additionally, the vector $\Pi_i = (\Pi_{i1}, \dots, \Pi_{iN})^T$ appearing in the above formulae (18) and (19) is a vector which will be $\Pi_{ij} = 1$ in the case the rating value $y_{ij}$ is known and which will be $\Pi_{ij} = 0$ in the case it is unknown. Also, the vector $Y_i$ appearing in the above formula (18) is a vector $y_i = (y_{i1}, \dots, y_{iN})^T$ that takes the rating value $y_{ij}$ as the element. Furthermore, the V appearing in the above formulae (18) and (19) is a matrix $V = (v_1, \dots, v_N)^T$ that takes the latent feature vector $v_j$ as the element. Furthermore, the X appearing in the above formulae (21) and (22) is a matrix $X = (x_1, \dots, x_N)^T$ that takes the feature vector $x_i$ as the element.

Furthermore, variational posterior distributions q ($\beta$), q (Y) related to the parameters $\beta$, Y of the probabilistic model will be formulae (23) and (26) below, respectively. Additionally, parameters $a'_{\beta h}$, $b'_{\beta h}$ appearing in formula (23) below are expressed by formulae (24) and (25) below, respectively. Also, parameters $a'_{\gamma k}$, $b'_{\gamma k}$ appearing in formula (26) below are expressed by formulae (27) and (28) below, respectively.

$$q(\beta) = \prod_{h=1}^{H} Gam(\beta_h; a'_{\beta h}, b'_{\beta h})$$

$$\dots (23)$$

$$b'_{\beta h} = E\left[ b_\beta + \frac{1}{2} \right.$$

$$\ldots (25)$$

$$q(\gamma) = \prod_{k=1}^{K} Gam(\gamma_k ; a'_{\gamma k}, b'_{\gamma k})$$

$$\ldots (26)$$

$$a'_{\gamma k} = a_{\gamma k} + \frac{H}{2}$$

$$\ldots (27)$$

$$b'_{\gamma k} = E\left[ b_\gamma + \frac{1}{2} \sum_{h=1}^{H} \right.$$

$$\ldots (28)$$

Since the va

is expressed using the abov

variational posterior distrib

updating the parameter of e

under another variational

Since the variational posterior distribution of each parameter is expressed using the above formulae (17) to (28), an optimal variational posterior distribution of each parameter is obtained by updating the parameter of each variational posterior distribution under another variational posterior distribution based on the following algorithm. In the following, the latent feature vector $u_i$ (i = 1,...,M) indicates an update algorithm.

(Update Algorithm for Latent Feature Vector $u_i$ (i = 1,...,M))

<<Initialisation>>

$$E[V] \leftarrow (\mu'_{v1}, \cdots, \mu'_{vN})^T$$

$$E[D] \leftarrow (\mu'_{d1}, \cdots, \mu'_{dH})^T$$

$$E[\beta] \leftarrow (a'_{\beta 1}/b'_{\beta 1}, \cdots, a'_{\beta H}/b'_{\beta H})^T$$

$$E[\gamma] \leftarrow (a'_{\gamma 1}/b'_{\gamma 1}, \cdots, a'_{\gamma K}/b'_{\gamma K})^T$$

<<Calculation of q (u$_i$) >>

$$for \quad i = 1 \quad to \quad M \quad do$$

$$E[V^T diag(\pi_i)V] \leftarrow \sum_{j=1}^{N} \pi_{ij}\left(\Sigma'_{vj} + \mu'_{vj}\,\mu'^{T}_{vj}\right)$$

$$\Sigma'_{ui} \leftarrow \{\lambda E[V^T diag(\pi_i)V] + diag(E[\beta])\}^{-1}$$

$$\mu'_{ui} \leftarrow \Sigma'_{ui}\{E[\lambda]E[V]^T diag(\pi_i)y_i + diag(E[\beta])E[D]x_i\}$$

$$end \quad for$$

*end for*

<<Calculation of q (d$_h$) >>

$$for \quad h = 1 \quad to \quad H \quad do$$

$$E[u_h] \leftarrow (\{\mu'_{u1}\}_h, \cdots, \{\mu'_{uM}\}_h)$$

$$\Sigma'_{dh} \leftarrow \{E[\beta_h]X^T X + diag(E[\gamma])\}^{-1}$$

$$\mu'_{dh} \leftarrow E[\beta_h]\Sigma'_{dh} X^T E[u_h]$$

$$end \quad for$$

<<Calculation of q (β) >>

$$for \quad h = 1 \quad to \quad H \quad do$$

$$E[u_{ih}^2] \leftarrow \{\Sigma'_{ui}\}_{hh} + \{\mu'_{ui}\}_h^2$$

$$E[u_{ih}] \leftarrow \{\mu'_{ui}\}_h$$

$$E[d_h] \leftarrow \mu'_{dh}$$

$$a'_{\beta h} \leftarrow a_\beta + \frac{M}{2}$$

$$b'_{\beta h} \leftarrow b_{\beta h} + \frac{1}{2}\sum_{i=1}^{M}\left\{E[u_{ih}^2] - 2E[u_{ih}]x_i^T E[d_h] + \sum_{k=1}^{K} x_{ik}^2 E[d_{hk}^2]\right\}$$

$$end \quad for$$

<<Calculation of q ($\gamma$) >>

$$for \quad k = 1 \quad to \quad K \quad do$$

$$E[d_{hk}^2] \leftarrow \{\Sigma'_{dh}\}_{kk} + \{\mu'_{dh}\}_k^2$$

$$a'_{\gamma k} \leftarrow a_\gamma + \frac{H}{2}$$

$$b'_{\gamma k} \leftarrow b_\gamma + \frac{1}{2}\sum_{h=1}^{H} E[d_{hk}^2]$$

$$end \quad for$$

Similarly, an update algorithm for the latent feature vector $v_j$ (j = 1,...,N) will be as follows. Additionally, in the update algorithm for the latent feature vector $v_j$, $\beta = (\beta_1, \dots , \beta_H)$ indicates $\beta_v$, D indicates $D_v$, $d_h$ indicates $d_{vh}$, and $x_j$ indicates $x_{vj}$. Furthermore, the feature quantity $x_j$ and also the regression vector $d_h$ and the parameter $\gamma_h$ of its prior distribution are assumed to be K-dimensional. Furthermore, $\Pi_j = (\Pi_{1j},..., \Pi_{Mj})^T$ is a vector which will be $\Pi_{ij}$ = 1 in the case the rating value $y_{ij}$ is known and which will be $\Pi_{ij}$ = 0 in the case it is unknown. Furthermore, $y_j$ is a vector $y_j$ = $(y_{1j}, .. , y_{Mj})^T$ that takes the rating value $y_{ij}$ as the element. Also, U is a matrix U = $(u_1, \dots , u_M)^T$ that takes the latent feature vector $u_i$ as the element. Furthermore, X is a matrix x = $(x_1, \dots , x_M)^T$ that takes the feature vector $x_j$ as the element.

(Update Algorithm for Latent Feature Vector $v_j$ (j = 1, ... ,N) )

<<Initialisation>>

$$E[U] \leftarrow (\mu'_{u1}, \cdots , \mu'_{uM})^T$$

$$E[D] \leftarrow (\mu'_{d1}, \cdots, \mu'_{dH})^T$$

$$E[\beta] \leftarrow (a'_{\beta 1} / b'_{\beta 1}, \cdots, a'_{\beta H} / b'_{\beta H})^T$$

$$E[\gamma] \leftarrow (a'_{\gamma 1} / b'_{\gamma 1}, \cdots, a'_{\gamma K} / b'_{\gamma K})^T$$

<<Calculation of q ($v_j$) >>

$$
\begin{aligned}
&for \quad j = 1 \quad to \quad N \quad do \\
&\quad E[U^T diag(\pi_j)U] \leftarrow \sum_{i=1}^{M} \pi_{ij}\left(\Sigma'_{ui} + \mu'_{ui}\,\mu'^{T}_{ui}\right) \\
&\quad \Sigma'_{vj} \leftarrow \{\lambda E[U^T diag(\pi_j)U] + diag(E[\beta])\}^{-1} \\
&\quad \mu'_{vj} \leftarrow \Sigma'_{vj}\{E[\lambda]E[U]^T diag(\pi_j)y_j + diag(E[\beta])E[D]x_j\} \\
&end \quad for
\end{aligned}
$$

<<Calculation of q ($d_h$) >>

$$
\begin{aligned}
&for \quad h = 1 \quad to \quad H \quad do \\
&\quad E[v_h] \leftarrow (\{\mu'_{v1}\}_h, \cdots, \{\mu'_{vN}\}_h) \\
&\quad \Sigma'_{dh} \leftarrow \{E[\beta_h]X^T X + diag(E[\gamma])\}^{-1} \\
&\quad \mu'_{dh} \leftarrow E[\beta_h]\Sigma'_{dh} X^T E[v_h] \\
&end \quad for
\end{aligned}
$$

<<Calculation of q ($\beta$) >>

$$for \quad h = 1 \quad to \quad H \quad do$$

$$E[v_{jh}^2] \leftarrow \{\Sigma'_{vj}\}_{hh} + \{\mu'_{vj}\}_h^2$$

$$E[v_{jh}] \leftarrow \{\mu'_{vj}\}_h$$

$$E[d_h] \leftarrow \mu'_{dh}$$

$$a'_{\beta h} \leftarrow a_\beta + \frac{N}{2}$$

$$b'_{\beta h} \leftarrow b_{\beta h} + \frac{1}{2}\sum_{j=1}^{N}\left\{E[v_{jh}^2] - 2E[v_{jh}]x_j^T E[d_h] + \sum_{k=1}^{K} x_{jk}^2 E[d_{hk}^2]\right\}$$

$$end \quad for$$

<<Calculation of q ($\gamma$) >>

$$for \quad k = 1 \quad to \quad K \quad do$$

$$E[d_{hk}^2] \leftarrow \{\Sigma'_{dh}\}_{kk} + \{\mu'_{dh}\}_k^2$$

$$a'_{\gamma k} \leftarrow a_\gamma + \frac{H}{2}$$

$$b'_{\gamma k} \leftarrow b_\gamma + \frac{1}{2}\sum_{h=1}^{H} E[d_{hk}^2]$$

$$end \quad for$$

The posterior distribution calculation unit 103 iteratively performs the above update algorithms alternately for U and V until parameters have converged. The variational posterior distribution of each parameter can be obtained by this process. Additionally, the parameters $\lambda$, $\gamma$ may be hyper-parameters provided in advance. In this case, the parameter $\beta$ is updated based on formula (29) below in the update algorithm for the latent feature vector $u_i$ (i = 1,...,M). The parameter $\beta$ is similarly updated in the update algorithm for the latent feature vector $v_j$ (j = 1, ..., N) .

$$\beta_h^{-1} = \frac{1}{M} E\left[\sum_{i=1}^{M}\left(u_{ih} - d_h^T x_i\right)^2\right]$$

$$\cdots \quad (29)$$

The variational posterior distributions obtained here are input from the posterior distribution calculation unit 103 to the rating value prediction unit 105. The process up to here is the estimation step. When this estimation step is completed, the rating prediction device 100 proceeds with the process to the prediction step.

(Rating Value Prediction Unit 105)

As the process of the prediction step, the rating value prediction unit 105 calculates the expectation of the rating value $y_{ij}$ based on the variational posterior distribution of each parameter input from the posterior distribution calculation unit 103. As described above, the variational posterior distributions q $(u_i)$, q $(v_j)$ of the latent feature vectors are obtained by the posterior distribution calculation unit 103. Thus, as shown in formula (30) below, the rating value prediction unit 105 calculates an expectation of the inner product (rating value $y_{ij}$) of the latent feature vectors $u_i$, $v_j$. The expectation of the rating value calculated by the rating value prediction unit 105 in this manner is stored in the predicted rating value database 106.

$$E[y_{ij}] = E[u_i^T v_j]$$

$$= E[u_i^T]E[v_j]$$

$$= \mu_{ui}'^T \mu_{vj}'$$

$$\ldots \ (30)$$

(Recommendation Unit 107, Communication Unit 108)

The recommendation unit 107 refers to the expectation (hereinafter, predicted rating value) of an unknown rating value stored in the predicted rating value database 106, and, in the case the predicted rating value is high, recommends an item to a user. For example, in a case a predicted rating value $y_{mn}$ exceeds a predetermined threshold value, the recommendation unit 107 recommends an item n to a user m. Also, the recommendation unit 107 may refer to the predicted rating value database 106, generate a list by sorting items not evaluated by a user in a descending order of the predicted rating value, and present the list to the user. For example, the recommendation unit 107 transmits the generated list to the user terminal 300 via the communication unit 108. Then, the transmitted list is transmitted to the user terminal 300 via the network 200 and is displayed on display means (not shown) of the user terminal 300.
In the foregoing, a functional configuration of the rating prediction device 100 has been described.

(Memory Capacity Savings and Computational Savings)

Now, to realize the filtering method described above by using latent feature vectors $u_i$, $v_j$ having a somewhat large number of dimensions, sufficient memory capacity will be necessary. For example, to hold $\Sigma'_{ui}$ (i = 1, ..., M) and $\Sigma'_{vj}$(j = 1, ..., N) appearing in the update algorithm described above in a memory, memory spaces of O $(MH^2)$[bit] and O $(NH^2)$ [bit] will be necessary, respectively. Thus, if the number of users M, the number of items N, and the number H of dimensions of the latent feature vector are large, a tremendous memory capacity will be necessary to hold them.
Similarly, to hold $\Sigma'_{dh}$ (h = 1,...,H), a memory space of O $(HK^2)$ [bit] will be necessary. Thus, if the number H of dimensions of the latent vector or the number K of feature quantities is large, a tremendous memory capacity will be necessary to hold it. Also, if the number H of dimensions of the latent vector or the number K of feature quantities is large, not only the memory capacity necessary at the time of performing the update algorithm described above, but also the amount of computation will be tremendously large. For example, an amount of computation of O $(K^3)$ will be necessary to obtain $\Sigma'_{dh}$.
To reduce the amount of computation and memory capacity necessary for performing the update algorithm described above, the mean vectors $\mu'_{ui}$, $\mu'_{vj}$, and $\mu'_{dh}$ may be updated by a conjugate gradient method or the like, and $\Sigma'_{ui}$, $\Sigma'_{vj}$, and $\Sigma'_{dh}$ may be made to hold only a diagonal element, for example. The memory capacity that is necessary can be greatly reduced by using this method. Specifically, $\mu'_{dh}$ is updated by solving formula (31) below by the conjugate gradient method or the like. Also, $\Sigma'_{dh}$ is made to hold only a diagonal element as in formula (32) below. Additionally, the amount of computation and the memory capacity necessary can be reduced also by using formula (33) below instead of the above formula (29).

$$\left(\beta_h X^T X + diag(\gamma)\right)\mu'_{dh} = \beta_h X^T E[u_{\cdot h}]$$

$$\dots (31)$$

$$\Sigma'_{dh} = \left(diag(\beta_h X^T X + diag(\gamma))\right)^{-1}$$

$$\dots (32)$$

$$\beta_h^{-1} = \frac{1}{M} E\left[\sum_{i=1}^{M}\left(u_{ih} - E[d_h^T x_i]\right)^2\right]$$

$$\dots (33)$$

(1-2-3: Operation of Rating Prediction Device 100)

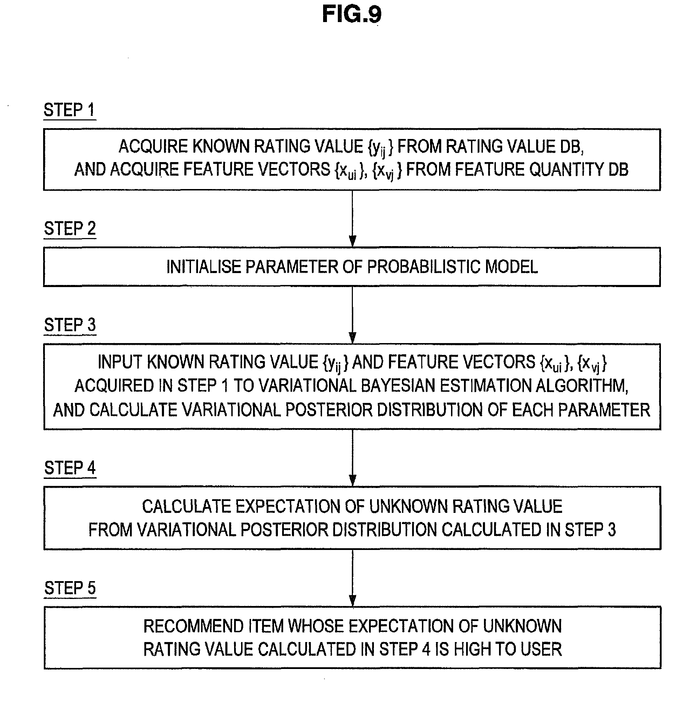

Next, referring to FIG. 9, an operation of the rating prediction device 100 will be stated and a flow of processes according to the probabilistic matrix factorisation-based collaborative filtering will be described. FIG. 9 is an explanatory diagram for describing a flow of processes according to the probabilistic matrix factorisation-based collaborative filtering.

First, the rating prediction device 100 acquires, by a function of the posterior distribution calculation unit 103, the known rating value $\{y_{ij}\}$ from the rating value database 101 and the feature vectors $\{x_{ui}\}$, $\{x_{vj}\}$ from the feature quantity database 102 (Step 1). Then, the rating prediction device 100 initialises the parameters included in the probabilistic model by a function of the posterior distribution calculation unit 103 (Step 2). Then, the rating prediction device 100 inputs the known rating value $\{y_{ij}\}$ and the feature vectors $\{x_{ui}\}$, $\{x_{vj}\}$ acquired in Step 1 to a variational Bayesian estimation algorithm, and calculates the variational posterior distribution of each parameter, by a function of the posterior distribution calculation unit 103 (Step 3) .

A variational posterior distribution calculated in Step 3 is input from the posterior distribution calculation unit 103 to the rating value prediction unit 105. Then, the rating prediction device 100 calculates, by a function of the rating value prediction unit 105, an expectation (predicted rating value) of an unknown rating value from the variational posterior distribution calculated in Step 3 (Step 4). The predicted rating value calculated here is stored in the predicted rating value database 106. Then, the rating prediction device 100 recommends an item whose predicted rating value calculated in Step 4 is high to a user by a function of the recommendation unit 107 (Step 5).

As has been described, the probabilistic matrix factorisation-based collaborative filtering described above is a new filtering method that takes a known feature vector into account while including the element of the matrix factorisation-based collaborative filtering. Thus, a high estimation accuracy can be realized even in a situation where the number of users or the number of items is small or there are few known rating values.

(Example Application)

In the foregoing, an explanation has been given on the method of predicting an unknown rating value in relation to a rating value of a combination of a user and an item. However, the present method can be applied to any method of predicting an unknown label in relation to an arbitrary label assigned to a combination of an item in an item group A and an item in an item group B.

(Example 1) The probabilistic matrix factorisation-based collaborative filtering described above can be applied to a system for predicting, in relation to a combination of a user and an item, a rating value to be given by a user to an item or a purchase probability and making a recommendation. In this case, as the feature quantity of a user, age, sex, occupation, birthplace, or the like, is used, for example. On the other hand, as the feature quantity of an item, genre, author, cast, date, or the like, is used, for example.

(Example 2) Furthermore, the probabilistic matrix factorisation-based collaborative filtering described above can be applied to a system for predicting, in relation to a combination of a user and a disease, the probability of a user getting a disease. In this case, as the feature quantity of a user, age, sex, lifestyle, genes, or the like, is used, for example. Additionally, if only the feature quantity based on genes is used, application to a system for associating genes and disease can be realized.

(Example 3) Furthermore, the probabilistic matrix factorisation-based collaborative filtering described above can be applied to a system for predicting, in relation to a combination of a stock and market, the price of a stock. In this case, as the feature quantity of a stock, a feature quantity based on financial statements of a company, a time-dependent feature quantity such as an average market price or the price of another company in the same trade, or the like, is used, for example.

(Example 4) Furthermore, the probabilistic matrix factorisation-based collaborative filtering described above can be applied to a system for predicting, in relation to a combination of a user and content, a rating vocabulary of a user for content, and presenting content that matches the vocabulary. In this case, as the feature quantity of content, an image feature quantity, a feature quantity obtained by 12 tone analysis, or the like, is used, for example.

(Example 5) Furthermore, the probabilistic matrix factorisation-based collaborative filtering described above can be applied to an SNS support system for predicting, in relation to a combination of users, accessibility between users. In this case, as the feature quantity of a user, age, sex, diary, a feature quantity of a friend, or the like, is used, for example.

(Example 6) Furthermore, the probabilistic matrix factorisation-based collaborative filtering described above can be applied to a system for predicting, in relation to an image and a vocabulary, whether an object indicated by the vocabulary is present in the image or not.

As described, the probabilistic matrix factorisation-based collaborative filtering described above can be applied to systems for predicting labels assigned to combinations of various item groups A and B.

In the foregoing, the new probabilistic matrix factorisation-based collaborative filtering devised by the present inventor has been described. Additionally, an explanation has been given to the probabilistic matrix factorisation-based collaborative filtering with a high prediction accuracy which has been devised by the present inventor, but, in addition to that, filtering methods that use probabilistic matrix factorisation are known (see Documents 1 to 3, for example). The filtering method described in Document 1 is a method that is based on variational Bayesian estimation. The filtering method described in Document 2 is a method that is based on MAP estimation (regularized least squares solution). Furthermore, the filtering method described in Document 3 is a method that is based on Bayesian estimation by Gibbs sampling.

Methods that are based on the variational Bayesian estimation or the Bayesian estimation by Gibbs sampling are known to be more accurate than a method that is based on the MAP estimation. However, the methods based on the variational Bayesian estimation or the Bayesian estimation by Gibbs sampling use a large amount of computation compared to the method based on the MAP estimation, and, thus, they re not realistic in a case application to a Web service with several million to several hundred million users, or the like, is assumed. Thus, a method capable of swiftly obtaining a highly accurate result is desired.

Accordingly, the present inventor has devised a fast solution that is based on the variational Bayesian estimation. Additionally, a calculation result obtained by this solution may be used as the initial value of each method based on the variational Bayesian estimation described above. By using a calculation result obtained by this solution as the initial value, it becomes possible to accelerate the convergence of processes iteratively performed in the variational Bayesian estimation or to prevent, in the process, convergence to a local solution of low quality. In the following, this fast solution will be described in detail.

<2. Embodiment>

An embodiment of the present disclosure will be described. The present embodiment relates to a method of accelerating computation related to probabilistic matrix factorization that is based on the variational Bayesian estimation, and, also, of reducing the amount of memory necessary to perform the computation.

[2-1: Configuration of Rating Prediction Device 100]

First, a functional configuration of a rating prediction device 100 according to the present embodiment will be described with reference to FIG. 10. Additionally, the configuration of the rating prediction device 100 excluding structural elements for predicting a rating value (mainly the posterior distribution calculation unit 103 and the rating value prediction unit 105 in FIG. 6) is substantially the same as the rating prediction device 100 shown in FIG. 6. Accordingly, only the structural elements for predicting a rating value will be described here in detail. FIG. 10 is an explanatory diagram for describing the structural elements related to prediction of a rating value among the structural elements of the rating prediction device 100.

As shown in FIG. 10, the rating prediction device 100 according to the present embodiment includes, as the structural elements related to prediction of a rating value, an initial value calculation unit 131, a posterior distribution calculation unit 132, and a rating value prediction unit 133. The initial value calculation unit 131 and the posterior distribution calculation unit 132 replace the posterior distribution calculation unit 103 in FIG. 6, and the rating value prediction unit 133 replaces the rating value prediction unit 105 in FIG. 6.

(Initial Value Calculation Unit 131)

First, a function of the initial value calculation unit 131 will be described. The initial value calculation unit 131 is means for calculating an initial value for variational Bayesian estimation performed by the posterior distribution calculation unit 132.

As in the above, a rating value corresponding to items i, j will be expressed as $y_{ij}$. Also, a parameter $\Pi_{ij}$ which will be $\Pi_{ij} = 1$ in the case the rating value $y_{ij}$ is known and which will be $\Pi_{ij} = 0$ in the case the rating value $y_{ij}$ is unknown is defined. Furthermore, a rating value matrix whose number of ranks is H and which takes the rating value $y_{ij}$ as an element is defined as $Y = \{y_{ij}\}$, and a residual matrix of a rank h of the rating value matrix Y is defined as $R^{(h)} = \{r_{ij}^{(h)}\}$ . Also, latent feature vectors $u_{\cdot h} \in R^M$, $v_{\cdot h} \in R^N$ corresponding to the residual matrix $R^{(h)}$ are defined. Additionally, each element in the residual matrix $R^{(h)}$ is defined as formula (34) below.

$$r_{ij}^{(h)} = \pi_{ij}\left( y_{ij} - \sum_{k=1}^{h-1} E[u_{ik}]E[v_{jk}] \right)$$

$$\ldots \ (34)$$

The initial value calculation unit 131 performs probabilistic matrix factorization on this residual matrix $R^{(h)}$ by the latent feature vectors $u_{\cdot h} \in R^M$, $v_{\cdot h} \in R^N$. First, the initial value calculation unit 131 takes an element $r_{ij}^{(h)}$ in the residual matrix $R^{(h)}$ and the latent feature vector $u_{\cdot h}$ as random variables according to normal distribution as in formulae (36) and (37) below, respectively. Furthermore, the initial value calculation unit 131 takes an expectation $\mu_h$ of the latent feature vector $u_{\cdot h}$ as a random variable according to normal distribution as in formula (38) below. Additionally, for the sake of simplicity, it is assumed that $\lambda$ and $\xi$ are hyper-parameters determined in advance. It is also assumed that $\lambda$ and $\xi$ are common for all the ranks h = 1, ..., H .

$$p(r_{ij}^{(h)} \mid u_{ih}, v_{jh}) = N(r_{ij}^{(h)}; u_{ih}v_{jh}, \lambda^{-1})$$

$$\ldots \ (36)$$

$$p(u_{ih} \mid \mu_h, \gamma_h) = N(u_{ih}; \mu_h, \gamma_h^{-1})$$

$$\ldots \ (37)$$

$$p(\mu_h \mid \xi) = N(\mu_h; \xi^{-1})$$

$$\ldots \ (38)$$

If modeling is performed as the above formulae (36) to (38), the initial value calculation unit 131 can obtain a variational posterior distribution q $(u_{\cdot h})$ of the latent feature vector $u_{\cdot h}$ and a variational posterior distribution q $(\mu_{uh})$ of the expectation $\mu_h$ based on formulae (39) and (42) below. Additionally, parameters $\mu'_{uih}$, $\sigma'_{uih}$ included in formula (39) below are defined by formulae (40) and (41) below. Also, parameters $\mu'_{\mu uh}$, $\sigma'_{\mu uh}$ included in formula (42) below are defined by formula (43) and (44)below.

$$q(u_{ih}) = N(u_{ih}; \mu'_{u_{ih}}, \sigma'^2_{u_{ih}})$$

... (39)

$$\mu'_{u_{ih}} = E\left[\sigma'^2_{u_{ih}} \left\{ \lambda v^T_{\cdot h} diag(\pi_i) y_i + \gamma_h \mu_{uh} \right\} \right]$$

... (40)

$$(\sigma'^2_{u_{ih}})^{-1} = E\left[ \lambda v^T_{\cdot h} diag(\pi_i) v_{\cdot h} + \gamma_h \right]$$

... (41)

$$q(\mu_{uh}) = N(\mu_{uh}; \mu'_{\mu_{uh}}, \sigma'^2_{\mu_{uh}})$$

... (42)

$$\mu'_{\mu_{uh}} = E\left[ \gamma_h \sigma'^2_{\mu_{uh}} \sum_{i=1}^{M} u_{ih} \right]$$

... (43)

$$(\sigma'^2_{\mu_{uh}})^{-1} = M\gamma_h + \xi$$

... (44)

A variational posterior distribution q ($v_{\cdot h}$) of the latent feature vector $v_{\cdot h}$ and a variational posterior distribution q ($\mu_{vh}$) of the expectation $\mu_{vh}$ are similarly expressed by the above formulae (39) and (42), respectively (u is changed to v, and i to j), and, thus, the initial value calculation unit 131 can obtain the variational posterior distribution q ($v_{\cdot h}$) of the latent feature vector $v_{\cdot h}$ and the variational posterior distribution q ($\mu_{vh}$) of the expectation $\mu_{vh}$ in the same manner. When the above variational posterior distributions are obtained, the initial value calculation unit 131 updates a parameter $\gamma_h$ based on formula (45) below by using the variational posterior distributions.

$$\gamma_h^{-1} = \frac{1}{M} E\left[\sum_{i=1}^{M} (u_{ih} - \mu_{uh})^2\right]$$

$$\ldots \ (45)$$

Furthermore, after appropriate initialization, the initial value calculation unit 131 updates the variational posterior distribution of a parameter such as the latent feature vector or the expectation under the variational posterior distribution of another parameter. This update process is iteratively performed until each parameter has converged. When each parameter has converged, the initial value calculation unit 131 inputs the variational posterior distribution that is eventually obtained to the posterior distribution calculation unit 132. Additionally, a concrete algorithm for updating the variational posterior distribution by the initial value calculation unit 131 (hereinafter, rankwise variational Bayesian estimation algorithm) will be as follows.

(Rankwise Variational Bayesian Estimation Algorithm)

Initialize $\{\mu', \sigma'^2\}$ for $\{u_{ih}\}_{i=1,h=1}^{M,H}$, $\{v_{jh}\}_{j=1,h=1}^{N,H}$, $\{\mu_{uh}, \mu_{vh}\}_{h=1}^{H}$

$$R \leftarrow \Pi \circ Y$$

```
for h=0 to H do
  while not converged do
    for i=1 to M do
```

$$\sigma'^2_{u_{ih}} \leftarrow E\left[\lambda v_{\cdot h}^T diag(\pi_i)v_{\cdot h} + \gamma_{uh}\right]^{-1}$$

$$\mu'_{u_{ih}} \leftarrow E\left[\sigma'^2_{u_{ih}} \{\lambda v_{\cdot h}^T diag(\pi_i)y_i + \gamma_{uh}\mu_{uh}\right]$$

```
    end for
```

$$\sigma'^2_{\mu_{uh}} \leftarrow \left(M\gamma_{uh} + \xi\right)^{-1}$$

$$\mu'_{uh} \leftarrow E\left[\gamma_{uh}\sigma'^2_{\mu_{uh}} \sum_{i=1}^{M} u_{ih}\right]$$

Update $\{\mu'_{\cdot}, \sigma'^2_{\cdot}\}$ for $\{v_{jh}\}_{j=1,h=1}^{N,H}, \{\mu_{vh}\}_{h=1}^{H}$ in the same way.

```
  end while
  for i=1 to M do
    for j=1 to N do
```

$$r_{ij} \leftarrow \pi_{ij}\left(r_{ij} - \mu'_{u_{ih}}\mu'_{v_{jh}}\right)$$

```
    end for
  end for
end for
```

(Method of Setting Initial Value)

A method of using a variational posterior distribution obtained by the rankwise variational Bayesian estimation as the initial value of a normal variational Bayesian estimation described later will be described. $\mu'_{uih}$ obtained by the rankwise variational Bayesian estimation is used as the initial value of $\mu'_{uih}$ of the normal variational Bayesian estimation described below, and $\mu'_{vjh}$ obtained by the rankwise variational Bayesian estimation is used as the initial value of $\mu'_{vjh}$. diag ($\sigma'^2_{ui1}$, ..., $\sigma'^2_{uiH}$) is used as the initial value of $\Sigma'_{ui}$, and diag ($\sigma'^2_{vj1}$, ..., $\sigma'^2_{vjH}$) is used as the initial value of $\Sigma'_{vj}$. Initialisation is completed by setting these initial values and then updating $\mu'_{\mu u}$, $\Sigma'_{\mu u}$, $\mu'_{\mu v}$, and $\Sigma'_{\mu v}$ once by the normal variational Bayesian estimation described later.

(Posterior Distribution Calculation Unit 132)

The posterior distribution calculation unit 132 is means for calculating the variational posterior distribution of a parameter by the variational Bayesian estimation. A case is assumed here where the rating value $y_{ij}$ is modeled as formula (46) below. Additionally, when expressing the latent feature vectors by matrices $U = (u_1, ..., u_M)^T$, $V = (v_1, ..., v_N)^T$, the expectation of the rating value matrix $Y = \{Y_{ij}\}$ is given by $UV^T$. When expressing the prior distributions of the

latent feature vectors $u_i$, $v_j$ by formulae (47) and (48) below, respectively, and taking the presence/absence of the rating value $y_{ij}$ into account as in formula (49) below, log likelihood of learning data (a known rating value or the like) is expressed as formula (50) below (corresponding to regularized squared error). Additionally, matrix $\Pi$ is equal to $\{\Pi_{ij}\}$.

$$p(y_{ij} \mid u_i, v_j, \lambda) = N(y_{ij}; u_i^T v_j, \lambda^{-1})$$

$$\dots \quad (46)$$

$$p(u_i \mid \gamma) = N(u_i; 0, \gamma^{-1}I)$$

$$\dots \quad (47)$$

$$p(v_j \mid \gamma) = N(v_j; 0, \gamma^{-1}I)$$

$$\dots \quad (48)$$

$$p(y_{ij} \mid u_i, v_j, \lambda, \pi_{ij}) = p(y_{ij} \mid u_i, v_j, \lambda)^{\pi_{ij}}$$

$$\dots \quad (49)$$

$$\ln p(Y \mid U, V, \lambda, \Pi)$$

$$= -\frac{\lambda}{2} J(U, V; Y, \Pi) - \frac{\gamma}{2} R(U, V) + const.$$

$$\dots \quad (50)$$

Additionally, mean parameters may be introduced in the prior distributions of the latent feature vectors $u_i$, $v_j$ expressed by the above formulae (47) and (48), or a diagonal matrix or a dense symmetric matrix may be used instead of $\gamma^{-1}I$ as the covariance matrix. For example, the prior distributions of the latent feature vectors $u_i$, $v_j$ may be expressed as formulae (51) and (53) below, respectively. Additionally, the expectation $\mu_u$ included in formula (51) below is expressed by a random variable according to a normal distribution as formula (52) below. Also, $\Xi$ is assumed to be a hyper-parameter.

$$p(u_i \mid \mu_u, \Gamma) = N(u_i; \mu_u, \Gamma^{-1})$$

$$\dots \quad (51)$$

$$p(\mu_u \mid \Xi) = N(\mu_u; 0, \Xi^{-1})$$

$$\cdots (52)$$

$$p(v_j \mid \mu_v, \Gamma) = N(v_j; \mu_v, \Gamma^{-1})$$

$$\cdots (53)$$

$$p(\mu_v \mid \Xi) = N(\mu_v; 0, \Xi^{-1})$$

$$\cdots (54)$$

Now, a joint distribution of matrices Y, U, V, and μ can be expressed as formula (55) below. Furthermore, when a posterior distribution is factorised and variationally approximated, formula (56) below is obtained.

$$p(Y, U, V, \mu \mid \lambda, \Gamma, \Xi, \Pi)$$

$$= p(Y \mid U, V, \lambda, \Pi) \prod_{i=1}^{M} p(u_i \mid \mu, \Gamma) p(\mu \mid \Xi) p(V)$$

$$\cdots (55)$$

$$p(Y, U, V, \mu \mid \lambda, \Gamma, \Xi, \Pi) \approx \prod_{i=1}^{M} q(u_i) q(\mu) p(V)$$

$$\cdots (56)$$

Furthermore, when using the expression $\Gamma = \mathrm{diag}(y)$, the variational posterior distributions of the latent feature vector $u_i$ and its expectation $\mu_u$ are expressed as formulae (57) and (60) below, respectively. Additionally, parameters $\mu'_{ui}, \Sigma'_{ui}$ included in formula (57) below are defined by formulae (58) and (59) below, respectively. Also, parameters $\mu'_{\mu,u}, \Sigma'_{\mu,u}$ included in formula (60) below are defined by formula (61) and (62) below, respectively. Furthermore, $y_i$ is equal to $(y_{i1}, ..., y_{iM})^T$, and $\Pi_i$ is equal to $(\Pi_{i1}, ..., \Pi_{iM})^T$.

$$q(u_i) = N(u_i; \mu'_{u_i}, \Sigma'_{u_i})$$

$$\cdots (57)$$

$$\mu'_{u_i} = E\left[\Sigma'_{u_i}\left\{\lambda V^T diag(\pi_i)y_i + diag(\gamma)\mu\right\}\right]$$

... (58)

$$\Sigma'_{u_i}{}^{-1} = E\left[\lambda V^T diag(\pi_i)V + diag(\gamma)\right]$$

... (59)

$$q(\mu_u) = N(\mu_u; \mu'_{\mu_u}, \Sigma'_{\mu_u})$$

... (60)

$$\mu'_{\mu_u} = E\left[\Sigma'_{\mu_u} diag(\gamma)\sum_{i=1}^{M}u_i\right]$$

... (61)

$$\Sigma'_{\mu_u}{}^{-1} = Mdiag(\gamma) + \Xi$$

... (62)

When learning data is given, the posterior distribution calculation unit 132 can obtain the variational posterior distributions of the latent feature vector $u_i$ and the expectation $\mu_u$ based on the above formulae (57) and (60). Furthermore, the variational posterior distributions of the latent feature vector $v_j$ and the expectation $\mu_v$ are similarly expressed by the above formulae (57) and (60), respectively (u is changed to v, and i to j), and, thus, the posterior distribution calculation unit 132 can obtain the variational posterior distributions of the latent feature vector $v_j$ and the expectation $\mu_v$ in the same manner. When the variational posterior distributions described above are obtained, the posterior distribution calculation unit 132 updates the parameter $\gamma$ based on formula (63) below.

$$\gamma^{-1} = \frac{1}{M}E\left[\sum_{i=1}^{M}(u_i - \mu_u)^2\right]$$

... (63)

Furthermore, the posterior distribution calculation unit 132 updates the variational posterior distribution of a parameter such as the latent feature vector or the expectation under the variational posterior distribution of another parameter. At this time, the posterior distribution calculation unit 132 uses the variational posterior distribution input by the initial value calculation unit 131 as the initial value. This update process is iteratively performed until each parameter has converged. When each parameter has converged, the posterior distribution calculation unit 132 inputs the variational posterior distribution that is eventually obtained to the rating value prediction unit 133. Additionally, a concrete algorithm for updating the variational posterior distribution by the posterior distribution calculation unit 132 (hereinafter, variational Bayesian estimation algorithm) will be as follows.

(Variational Bayesian Estimation Algorithm)

Initialize $\{\mu', \Sigma'\}$ for $\{u_i\}_{i=1}^{M}, \{v_j\}_{j=1}^{N}, \mu_u, \mu_v$

```
while not converged do
  for i=1 to M do
```

$$\Sigma'_{u_i} \leftarrow E\left[\lambda V^T diag(\pi_i)V + diag(\gamma_u)\right]^{-1}$$

$$\mu'_{u_i} \leftarrow E\left[\Sigma'_{u_i}\{\lambda V^T diag(\pi_i)y_i + diag(\gamma_u)\mu_u\}\right]$$

```
  end for
```

$$\Sigma'_{\mu} \leftarrow \left(Mdiag(\gamma_u) + \Xi_u\right)^{-1}$$

$$\mu'_u \leftarrow E\left[\Sigma'_u diag(\gamma_u)\sum_{i=1}^{M} u_i\right]$$

```
  Update {μ',Σ'.} for {v_j}_{j=1}^{N}, μ_v in the same way.

  end while
```

(Rating Value Prediction Unit 133)

The rating value prediction unit 133 calculates the expectation of the rating value $y_{ij}$ based on the variational posterior distribution of each parameter input by the posterior distribution calculation unit 132. As described above, the variational posterior distributions q ($u_i$), q ($v_j$) of the latent feature vectors are obtained by the posterior distribution calculation unit 132. Thus, the rating value prediction unit 133 calculates an expectation of the inner product (rating value $y_{ij}$) of the latent feature vectors $u_i$, $v_j$, as shown by the above formula (30). The expectation of the rating value calculated by the rating value prediction unit 133 in this manner is output as a predicted rating value.

(Modified Example: Configuration for Predicting Rating Value from Calculation Result of Initial Value Calculation Unit 131)

Now, the configuration of using the variational posterior distribution obtained by the rankwise variational Bayesian estimation algorithm as the initial value of the variational Bayesian estimation algorithm described above has been described above. However, in a case fast prediction of a rating value is desired at the expense of a certain degree of prediction accuracy of a rating value, the variational posterior distribution obtained by the rankwise variational Bayesian estimation algorithm can also be used as it is for the prediction of a rating value. In this case, the variational posterior distribution obtained by the initial value calculation unit 131 is input to the rating value prediction unit 133, and a predicted rating value is calculated from the variational posterior distribution. Such modification is, of course, within the technical scope of the present embodiment.

(Amount of Computation and Amount of Memory Usage of Rankwise Variational Bayesian Estimation Algorithm)

The rankwise variational Bayesian estimation algorithm described above is faster than the variational Bayesian estimation algorithm described above or the algorithm for the variational Bayesian estimation used in the probabilistic matrix factorisation-based collaborative filtering described above. For example, in the case of predicting a rating value by using only the variational Bayesian estimation algorithm described above, the amount of computation for one iteration will be O ($|Y|$ $H^2$). Additionally, $|Y|$ is the number of known rating values given as learning data, and H is the number of ranks of a rating value matrix Y. The amount of memory usage in this case will be O ( (M+N) $H^2$). Accordingly, if large data is handled in this case, the amount of computation/the amount of memory usage will be unrealistic.

However, in the case of predicting a rating value by using only the rankwise variational Bayesian estimation algorithm described above, the amount of computation for one iteration for a rank will be O ($|Y|$), and the amount of memory usage will be O (M+N). That is, even if the rankwise estimation algorithm is performed for all the h = 1, ..., H, the amount of computation will be only O ($|Y|$ H), and the amount of memory usage only O ( (M+N) H). Accordingly, large data can be realistically handled. An effect of accelerating convergence of iterative process in the variational Bayesian estimation algorithm described above can be expected by using the variational posterior distribution obtained by using the rankwise variational Bayesian estimation algorithm as the initial value.

In the foregoing, a functional configuration of the rating prediction device 100 according to the present embodiment has been described. Additionally, the rankwise variational Bayesian estimation algorithm indicated in the above explanation is only an example, and it can be combined with the method of the probabilistic matrix factorisation-based collaborative filtering described in the above 1-2, for example.

[2-2: Experimental Result]

Next, let us discuss the performance of the rankwise variational Bayesian estimation algorithm with reference to FIGS. 11 and 12. FIGS. 11 and 12 are tables showing the results of experiments conducted to evaluate the performance of the rankwise variational Bayesian estimation algorithm. For performance evaluation, MovieLens data (see http://www.grouplens.org/) which is a data set containing rating values (ratings) of movies is used here. The MovieLens data includes rating values given to some items by users, features of the users (sex, age, occupation, zip code), and features of the items (genre).

Methods used for comparison are four methods: the rankwise variational Bayesian estimation algorithm described above (hereinafter, Rankwise PMF), an application algorithm which is obtained by applying the rankwise variational Bayesian estimation algorithm to the probabilistic matrix factorisation-based collaborative filtering described in the above 1-2 (hereinafter, Rankwise PMFR), a variational Bayesian estimation algorithm based on a general probabilistic matrix factorization (hereinafter, PMF), and the probabilistic matrix factorisation-based collaborative filtering described in the above 1-2 (hereinafter, PMFR). Moreover, a result by an approximation method where only a diagonal element is held, as in the above formula (32) (hereinafter, app.1), and a result by an approximation method where distribution of $d_h$ is not calculated, as in the above formula (33) (hereinafter, app.2), are also shown. Additionally, the PMF uses the variational posterior distribution obtained by the Rankwise PMF for initialization.

Numerical values shown in FIGS. 11 and 12 indicate an error. Referring to FIGS. 11 and 12, it can be seen that, on the whole, there is a tendency that the error becomes larger in the order of Rankwise PMF > Rankwise PMFR > PMF > PMFR. Also, when comparing exact (no approximation), app.1, and app.2, a result is obtained that the error is exact $\cong$ app.1 > app.2. However, the errors of the Rankwise PMF and the Rankwise PMFR are not significantly large compared to those of the PMF and the PMFR. That is, it can be said from the experimental results shown in FIGS. 11 and 12 that, even if the Rankwise PMF or the Rankwise PMFR with small amount of computation is used, the performance is not so reduced compared to the PMF or the PMFR.

As described above, by applying the method according to the present embodiment, filtering faster compared to the PMF or the PMFR can be realized without sacrificing the performance so much. Also, the method according to the present embodiment can keep the amount of memory usage low even in the case of handling large data.

<3:Example Hardware Configuration>

The function of each structural element of the rating prediction device 100 described above can be performed by using, for example, the hardware configuration of the information processing apparatus shown in FIG. 13. That is, the function of each structural element can be realized by controlling the hardware shown in FIG. 13 using a computer program. Additionally, the mode of this hardware is arbitrary, and may be a personal computer, a mobile information terminal such as a mobile phone, a PHS or a PDA, a game machine, or various types of information appliances. Moreover, the PHS is an abbreviation for Personal Handy-phone System. Also, the PDA is an abbreviation for Personal Digital Assistant.

As shown in FIG. 13, this hardware mainly includes a CPU 902, a ROM 904, a RAM 906, a host bus 908, and a bridge 910. Furthermore, this hardware includes an external bus 912, an interface 914, an input unit 916, an output unit 918, a storage unit 920, a drive 922, a connection port 924, and a communication unit 926. Moreover, the CPU is an abbreviation for Central Processing Unit. Also, the ROM is an abbreviation for Read Only Memory. Furthermore, the RAM is an abbreviation for Random Access Memory.

The CPU 902 functions as an arithmetic processing unit or a control unit, for example, and controls entire operation or a part of the operation of each structural element based on various programs recorded on the ROM 904, the RAM 906, the storage unit 920, or a removal recording medium 928. The ROM 904 is means for storing, for example, a program to be loaded on the CPU 90.2 or data or the like used in an arithmetic operation. The RAM 906 temporarily or perpetually stores, for example, a program to be loaded on the CPU 902 or various parameters or the like arbitrarily changed in execution of the program.

These structural elements are connected to each other by, for example, the host bus 908 capable of performing high-speed data transmission. For its part, the host bus 908 is connected through the bridge 910 to the external bus 912 whose data transmission speed is relatively low, for example. Furthermore, the input unit 916 is, for example, a mouse, a keyboard, a touch panel, a button, a switch, or a lever. Also, the input unit 916 may be a remote control that can transmit a control signal by using an infrared ray or other radio waves.

The output unit 918 is, for example, a display device such as a CRT, an LCD, a PDP or an ELD, an audio output device such as a speaker or headphones, a printer, a mobile phone, or a facsimile, that can visually or auditorily notify a user of acquired information. Moreover, the CRT is an abbreviation for Cathode Ray Tube. The LCD is an abbreviation for Liquid Crystal Display. The PDP is an abbreviation for Plasma Display Panel. Also, the ELD is an abbreviation for Electro-Luminescence Display.

The storage unit 920 is a device for storing various data. The storage unit 920 is, for example, a magnetic storage device such as a hard disk drive (HDD), a semiconductor storage device, an optical storage device, or a magneto-optical storage device. The HDD is an abbreviation for Hard Disk Drive.

The drive 922 is a device that reads information recorded on the removal recording medium 928 such as a magnetic disk, an optical disk, a magneto-optical disk, or a semiconductor memory, or writes information in the removal recording medium 928. The removal recording medium 928 is, for example, a DVD medium, a Blu-ray medium, an HD-DVD medium, various types of semiconductor storage media, or the like. Of course, the removal recording medium 928 may be, for example, an electronic device or an IC card on which a non-contact IC chip is mounted. The IC is an abbreviation for Integrated Circuit.

The connection port 924 is a port such as an USB port, an IEEE1394 port, a SCSI, an RS-232C port, or a port for connecting an externally connected device 930 such as an optical audio terminal. The externally connected device 930 is, for example, a printer, a mobile music player, a digital camera, a digital video camera, or an IC recorder. Moreover, the USB is an abbreviation for Universal Serial Bus. Also, the SCSI is an abbreviation for Small Computer System Interface.

The communication unit 926 is a communication device to be connected to a network 932, and is, for example, a communication card for a wired or wireless LAN, Bluetooth (registered trademark), or WUSB, an optical communication router, an ADSL router, or a modem for various types of communication. The network 932 connected to the communication unit 926 is configured from a wire-connected or wirelessly connected network, and is the Internet, a home-use LAN, infrared communication, visible light communication, broadcasting, or satellite communication, for example. Moreover, the LAN is an abbreviation for Local Area Network. Also, the WUSB is an abbreviation for Wireless USB. Furthermore, the ADSL is an abbreviation for Asymmetric Digital Subscriber Line.

It should be understood by those skilled in the art that various modifications, combinations, sub-combinations and alterations may occur depending on design requirements and other factors insofar as they are within the scope of the appended claims or the equivalents thereof.

(Notes)

The user is an example of a first item. The item is an example of a second item. The latent feature vector $u_i$ is an example of a first latent vector. The latent feature vector $v_j$ is an example of a second latent vector. The feature vector $x_{ui}$ is an example of a first feature vector. The feature vector $x_{vj}$ is an example of a second feature vector. The regression matrix $D_u$ is an example of a first projection matrix. The regression matrix $D_v$ is an example of a second projection matrix. The rating value prediction units 105, 133 are examples of a recommendation recipient determination unit.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

The present disclosure contains subject matter related to that disclosed in Japanese Priority Patent Application JP 2010-200980 filed in the Japan Patent Office on September 8, 2010, the entire content of which is hereby incorporated by reference.

**Claims**

1.  A rating prediction device comprising:

    a posterior distribution calculation unit for taking, as a random variable according to a normal distribution, each of a first latent vector indicating a latent feature of a first item, a second latent vector indicating a latent feature of a second item, and a residual matrix Rh of a rank h (h = 0 to H) of a rating value matrix whose number of ranks is H and which has a rating value expressed by an inner product of the first latent vector and the second latent vector as an element and performing variational Bayesian estimation that uses a known rating value given as learning data, and thereby calculating variational posterior distributions of the first latent vector and the second latent vector; and
    a rating value prediction unit for predicting the rating value that is unknown by using the variational posterior distributions of the first latent vector and the second latent vector calculated by the posterior distribution calculation unit.

2.  The rating prediction device according to claim 1,
    wherein the posterior distribution calculation unit
    takes, as initial values, variational posterior distributions of the first latent vector and the second latent vector obtained by taking the residual matrix Rh as the random variable and performing the variational Bayesian estimation, and calculates the variational posterior distributions of the first latent vector and the second latent vector by taking the rating value matrix as the random variable according to the normal distribution and performing the variational Bayesian estimation.

3.  The rating prediction device according to claim 2,
    wherein the posterior distribution calculation unit
    defines a first feature vector indicating a feature of the first item, a second feature vector indicating a feature of the second item, a first projection matrix for projecting the first feature vector onto a space of the first latent vector, and a second projection matrix for projecting the second feature vector onto a space of the second latent vector,
    expresses a distribution of the first latent vector by a normal distribution that takes a projection value of the first feature vector based on the first projection matrix as an expectation and expresses a distribution of the second latent vector by a normal distribution that takes a projection value of the second feature vector based on the second projection matrix as an expectation, and
    calculates variational posterior distributions of the first projection matrix and the second projection matrix together with the variational posterior distributions of the first latent vector and the second latent vector.

4.  The rating prediction device according to claim 3,
    wherein the rating value prediction unit takes, as a prediction value of the unknown rating value, an inner product of an expectation of the first latent vector and an expectation of the second latent vector calculated using the variational posterior distributions of the first latent vector and the second latent vector.

5.  The rating prediction device according to claim 4, further comprising:

    a recommendation recipient determination unit for determining, in a case the unknown rating value predicted by the rating value prediction unit exceeds a predetermined threshold value, a second item corresponding to the unknown rating value to be a recipient of a recommendation of a first item corresponding to the unknown rating value.

6.  The rating prediction device according to claim 5,
    wherein the second item indicates a user, and
    wherein the rating prediction device further includes a recommendation unit for recommending, in a case the recipient of the recommendation of the first item is determined by the recommendation recipient determination unit, the first item to the user corresponding to the recipient of the recommendation of the first item.

**7.** A rating prediction method comprising:

taking, as a random variable according to a normal distribution, each of a first latent vector indicating a latent feature of a first item, a second latent vector indicating a latent feature of a second item, and a residual matrix $R_h$ of a rank h (h = 0 to H) of a rating value matrix whose number of ranks is H and which has a rating value expressed by an inner product of the first latent vector and the second latent vector as an element and performing variational Bayesian estimation that uses a known rating value given as learning data, and thereby calculating variational posterior distributions of the first latent vector and the second latent vector; and

predicting the rating value that is unknown by using the calculated variational posterior distributions of the first latent vector and the second latent vector.

**8.** A program for causing a computer to realize:

a posterior distribution calculation function of taking, as a random variable according to a normal distribution, each of a first latent vector indicating a latent feature of a first item, a second latent vector indicating a latent feature of a second item, and a residual matrix $R_h$ of a rank h (h = 0 to H) of a rating value matrix whose number of ranks is H and which has a rating value expressed by an inner product of the first latent vector and the second latent vector as an element and performing variational Bayesian estimation that uses a known rating value given as learning data, and thereby calculating variational posterior distributions of the first latent vector and the second latent vector; and

a rating value prediction function of predicting the rating value that is unknown by using the variational posterior distributions of the first latent vector and the second latent vector calculated by the posterior distribution calculation function.

EP 2 428 926 A2

**FIG.1**

10

RECOMMENDATION SYSTEM

11

RATING VALUE DB

12

MATRIX FACTORISATION UNIT

13

RATING VALUE PREDICTION UNIT

14

RECOMMENDATION UNIT

# FIG.2

EXAMPLE OF RATING VALUE DB

| USER ID / ITEM ID | i=1 | i=2 | i=3 | ····· | i=M |
|---|---|---|---|---|---|
| j=1 | 3 | 1 | 3 | ····· | 5 |
| j=2 | 1 | 3 | 1 | ····· | 4 |
| j=3 | 1 | 2 | — | ····· | 4 |
| ⋮ | ⋮ | ⋮ | ⋮ | $y_{ij}$ | ⋮ |
| j=N | 5 | 1 | 2 | ····· | 1 |

RATING VALUE DESIRED TO BE ESTIMATED

EP 2 428 926 A2

# FIG.3

STRUCTURE OF LATENT FEATURE VECTOR $v_j$

| ITEM ID / LATENT FEATURE ID | $j=1$ | $j=2$ | $j=3$ | $\cdots\cdots$ | $j=N$ |
|---|---|---|---|---|---|
| $k=1$ | $v_{11}$ | $v_{21}$ | $v_{31}$ | $\cdots\cdots$ | $v_{N1}$ |
| $k=2$ | $v_{12}$ | $v_{22}$ | $v_{32}$ | $\cdots\cdots$ | $v_{N2}$ |
| $k=3$ | $v_{13}$ | $v_{23}$ | $v_{33}$ | $\cdots\cdots$ | $v_{N3}$ |
| $\vdots$ | $\vdots$ | $\vdots$ | $\vdots$ | $\cdots\cdots$ | $\vdots$ |
| $k=H$ | $v_{1H}$ | $v_{2H}$ | $v_{3H}$ | $\cdots\cdots$ | $v_{NH}$ |

$v_1$ $\quad$ $v_2$ $\quad$ $v_3$ $\quad$ $\cdots\cdots$ $\quad$ $v_N$

# FIG.4

STRUCTURE OF LATENT FEATURE VECTOR $u_i$

| LATENT FEATURE ID \ USER ID | $i=1$ | $i=2$ | $i=3$ | $\cdots\cdots$ | $i=M$ |
|---|---|---|---|---|---|
| $k'=1$ | $u_{11}$ | $u_{21}$ | $u_{31}$ | $\cdots\cdots$ | $u_{M1}$ |
| $k'=2$ | $u_{12}$ | $u_{22}$ | $u_{32}$ | $\cdots\cdots$ | $u_{M2}$ |
| $k'=3$ | $u_{13}$ | $u_{23}$ | $u_{33}$ | $\cdots\cdots$ | $u_{M3}$ |
| $\vdots$ | $\vdots$ | $\vdots$ | $\vdots$ | $\cdots\cdots$ | $\vdots$ |
| $k'=H$ | $u_{1H}$ | $u_{2H}$ | $u_{3H}$ | $\cdots\cdots$ | $u_{MH}$ |

$u_1$     $u_2$     $u_3$    $\cdots\cdots$    $u_M$

# FIG.5

STEP 1

ACQUIRE RATING VALUE $\{y_{ij}\}$ FROM RATING VALUE DB

STEP 2

CALCULATE LATENT FEATURE VECTORS $\{u_i\}$, $\{v_j\}$ THAT MINIMIZE OBJECTIVE FUNCTION Q=J+B*R, BY USING KNOWN $\{y_{ij}\}$ ACQUIRED IN STEP 1 (J: SQUARED ERROR, R: REGULARIZATION TERM R)

STEP 3

PREDICT UNKNOWN RATING VALUE $\{y_{mn}\}$ BY USING LATENT FEATURE VECTORS $\{u_i\}$, $\{v_j\}$ CALCULATED IN STEP 2

STEP 4

RECOMMEND ITEM n TO USER m BASED ON RATING VALUE $\{y_{mn}\}$ PREDICTED IN STEP 3

# FIG.6

RATING PREDICTION DEVICE — 100

FEATURE QUANTITY DB — 102

RATING VALUE DB — 101

POSTERIOR DISTRIBUTION CALCULATION UNIT — 103

PARAMETER HOLDING UNIT — 104

RATING VALUE PREDICTION UNIT — 105

PREDICTED RATING VALUE DB — 106

COMMUNICATION UNIT — 108

RECOMMENDATION UNIT — 107

200

USER TERMINAL — 300

EP 2 428 926 A2

# FIG.7

STRUCTURE OF FEATURE VECTOR $x_{uj}$

| FEATURE ID \ USER ID | $i=1$ | $i=2$ | $i=3$ | $\cdots\cdots$ | $i=M$ |
|---|---|---|---|---|---|
| $l=1$ | $x_{u11}$ | $x_{u21}$ | $x_{u31}$ | $\cdots\cdots$ | $x_{uM1}$ |
| $l=2$ | $x_{u12}$ | $x_{u22}$ | $x_{u32}$ | $\cdots\cdots$ | $x_{uM2}$ |
| $l=3$ | $x_{u13}$ | $x_{u23}$ | $x_{u33}$ | $\cdots\cdots$ | $x_{uM3}$ |
| $\vdots$ | $\vdots$ | $\vdots$ | $\vdots$ | $\cdots\cdots$ | $\vdots$ |
| $l=s$ | $x_{u1s}$ | $x_{u2s}$ | $x_{u3s}$ | $\cdots\cdots$ | $x_{uMs}$ |

$$x_{u1} \qquad x_{u2} \qquad x_{u3} \qquad \cdots\cdots \qquad x_{uM}$$

EP 2 428 926 A2

# FIG.8

STRUCTURE OF FEATURE VECTOR $x_{vj}$

| ITEM ID / FEATURE ID | j=1 | j=2 | j=3 | ····· | j=N |
|---|---|---|---|---|---|
| l'=1 | $x_{v11}$ | $x_{v21}$ | $x_{v31}$ | ····· | $x_{vN1}$ |
| l'=2 | $x_{v12}$ | $x_{v22}$ | $x_{v32}$ | ····· | $x_{vN2}$ |
| l'=3 | $x_{v13}$ | $x_{v23}$ | $x_{v33}$ | ····· | $x_{vN3}$ |
| ⋮ | ⋮ | ⋮ | ⋮ | ····· | ⋮ |
| l'=s' | $x_{v1s'}$ | $x_{v2s'}$ | $x_{v3s'}$ | ····· | $x_{vNs'}$ |
| | ↓ | ↓ | ↓ | ····· | ↓ |
| | $x_{v1}$ | $x_{v2}$ | $x_{v3}$ | ····· | $x_{vN}$ |

EP 2 428 926 A2

# FIG.9

STEP 1

ACQUIRE KNOWN RATING VALUE $\{y_{ij}\}$ FROM RATING VALUE DB,
AND ACQUIRE FEATURE VECTORS $\{x_{ui}\}$, $\{x_{vj}\}$ FROM FEATURE QUANTITY DB

STEP 2

INITIALISE PARAMETER OF PROBABILISTIC MODEL

STEP 3

INPUT KNOWN RATING VALUE $\{y_{ij}\}$ AND FEATURE VECTORS $\{x_{ui}\}$, $\{x_{vj}\}$
ACQUIRED IN STEP 1 TO VARIATIONAL BAYESIAN ESTIMATION ALGORITHM,
AND CALCULATE VARIATIONAL POSTERIOR DISTRIBUTION OF EACH PARAMETER

STEP 4

CALCULATE EXPECTATION OF UNKNOWN RATING VALUE
FROM VARIATIONAL POSTERIOR DISTRIBUTION CALCULATED IN STEP 3

STEP 5

RECOMMEND ITEM WHOSE EXPECTATION OF UNKNOWN
RATING VALUE CALCULATED IN STEP 4 IS HIGH TO USER

FIG.10

EP 2 428 926 A2

KNOWN RATING VALUE, HYPER-PARAMETER

132

POSTERIOR DISTRIBUTION CALCULATION UNIT

INITIAL VALUE

INITIAL VALUE CALCULATION UNIT

131

133

RATING VALUE PREDICTION UNIT

RATING PREDICTION VALUE

# FIG.11

EXPERIMENTAL RESULT 1: PERFORMANCE COMPARISON USING MovieLens 100K DATA (5-fold Cross-Validation)

| Method | Dim. | Ave.RMSE | Ave.MAE | Dim. | Ave.RMSE | Ave.MAE |
|---|---|---|---|---|---|---|
| Rankwise PMF | 10 | 0.9289 | 0.7230 | 30 | 0.9279 | 0.7235 |
| Rankwise PMFR exact | 10 | 0.9269 | 0.7204 | 30 | 0.9249 | 0.7199 |
| Rankwise PMFR app.1 | 10 | 0.9271 | 0.7205 | 30 | 0.9248 | 0.7198 |
| Rankwise PMFR app.2 | 10 | 0.9198 | 0.7162 | 30 | 0.9180 | 0.7157 |
| PMF | 10 | 0.9170 | 0.7156 | 30 | 0.9180 | 0.7166 |
| PMFR exact | 10 | 0.9086 | 0.7087 | 30 | 0.9100 | 0.7097 |
| PMFR app.1 | 10 | 0.9087 | 0.7088 | 30 | 0.9102 | 0.7098 |
| PMFR app.2 | 10 | 0.9065 | 0.7071 | 30 | 0.9081 | 0.7083 |

# FIG.12

EXPERIMENTAL RESULT 2: PERFORMANCE COMPARISON USING MovieLens 1M DATA (5-fold Cross-Validation)

| Method | Dim. | Ave.RMSE | Ave.MAE | Dim. | Ave.RMSE | Ave.MAE |
|---|---|---|---|---|---|---|
| Rankwise PMF | 10 | 0.8578 | 0.6706 | 30 | 0.8556 | 0.6675 |
| Rankwise PMFR exact | 10 | 0.8550 | 0.6687 | 30 | 0.8541 | 0.6662 |
| Rankwise PMFR app.1 | 10 | 0.8551 | 0.6687 | 30 | 0.8542 | 0.6662 |
| Rankwise PMFR app.2 | 10 | 0.8547 | 0.6687 | 30 | 0.8512 | 0.6643 |
| PMF | 10 | 0.8473 | 0.6630 | 30 | 0.8487 | 0.6627 |
| PMFR exact | 10 | 0.8437 | 0.6604 | 30 | 0.8450 | 0.6597 |
| PMFR app.1 | 10 | 0.8437 | 0.6604 | 30 | 0.8450 | 0.6597 |
| PMFR app.2 | 10 | 0.8435 | 0.6603 | 30 | 0.8427 | 0.6580 |

EP 2 428 926 A2

**FIG.13**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010200980 A

**Non-patent literature cited in the description**

- **RUSLAN SALAKHUTDINOV ; ANDRIY MNIH.** Probabilistic matrix factorisation. *Advances in Neural Information Processing Systems,* 2008, vol. 20
- **Y.J.LIM ; Y.W.TEH.** Variational Bayesian approach to movie rating prediction. *Proceedings of KDD Cup and Workshop,* 2007
- **RUSLAN SALAKHUTDINOV ; ANDRIY MNIH.** Probabilistic matrix factorisation. *Advances in Neural Information Processing Systems,* 2008, vol. 20
- **RUSLAN SALAKHUTDINOV ; ANDRIY MNIH.** Bayesian probabilistic matrix factorisation using Markov chain Monte Carlo. *Proceedings of the International Conference on Machine Learning,* 2008, vol. 25